(19) Europäisches Patentamt
European Patent Office
Office européen des brevets

(11) EP 2 313 345 B1

(12) # EUROPÄISCHE PATENTSCHRIFT

(45) Veröffentlichungstag und Bekanntmachung des Hinweises auf die Patenterteilung:
**06.03.2013 Patentblatt 2013/10**

(21) Anmeldenummer: **09780531.1**

(22) Anmeldetag: **14.07.2009**

(51) Int Cl.:
***C01G 9/02*** *(2006.01)* ***C09C 1/04*** *(2006.01)*

(86) Internationale Anmeldenummer:
**PCT/EP2009/058946**

(87) Internationale Veröffentlichungsnummer:
**WO 2010/007039 (21.01.2010 Gazette 2010/03)**

(54) **MODIFIZIERTE ZINKOXID-TEILCHEN**

MODIFIED ZINC OXIDE PARTICLES

PARTICULES D OXYDE DE ZINC MODIFIÉES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.07.2008 EP 08160755**

(43) Veröffentlichungstag der Anmeldung:
**27.04.2011 Patentblatt 2011/17**

(73) Patentinhaber: **BASF SE**
**67056 Ludwigshafen (DE)**

(72) Erfinder:
- **KARPOV, Andrey**
  **68159 Mannheim (DE)**
- **HIBST, Hartmut**
  **69198 Schriesheim (DE)**
- **SCHAMBONY, Simon**
  **67061 Ludwigshafen (DE)**
- **RIGGS, Richard**
  **68159 Mannheim (DE)**
- **HAREMZA, Sylke**
  **69151 Neckargemünd (DE)**

(56) Entgegenhaltungen:
**WO-A-2004/052327 WO-A-2004/111136**
**WO-A-2006/099952 DE-A1- 19 907 704**

EP 2 313 345 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Verfahren zur Herstellung modifizierter Zinkoxid-Teilchen. Ein weiterer Gegenstand der Erfindung sind ausgewählte modifizierte Zinkoxid-Teilchen. Verwendungen von nach diesen Verfahren hergestellten modifizierten Zinkoxid-Teilchen, insbesondere bei der Ausrüstung von Kunststoffen, in Katalysatoren oder als halbleitende Schichten, sind ebenfalls Gegenstand der Erfindung. Weitere Gegenstände der Erfindung sind Materialien, welche modifizierte Zinkoxid-Teilchen enthalten, die nach diesem Verfahren hergestellt wurden und Verfahren zur Einarbeitung modifizierter Zinkoxide in diese Materialien.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils konkret angegebenen Kombination, sondern auch in anderen Kombinationen verwendbar sind, ohne den Rahmen der Erfindung zu verlassen. Bevorzugt bzw. ganz bevorzugt sind die Ausführungsformen der vorliegenden Erfindung in denen alle Merkmale die bevorzugten bzw. ganz bevorzugten Bedeutungen haben.

Die Herstellung von Zinkoxid ("ZnO") durch so genannte trockene und nasse Verfahren ist bekannt.

Das trockene Verfahren umfasst die Verbrennung von metallischem Zink. Die häufig aggregierten Teilchen, der mit Hilfe des trockenen Verfahrens gewonnen Zinkoxide zeichnen sich durch eine breite Größenverteilung im Mikrometerbereich und darüber hinaus aus.

Feinteiliges Zinkoxid wird vor allem nasschemisch durch Fällungsprozesse hergestellt. Die Fällung in wässriger Lösung liefert in der Regel hydroxid- und/oder carbonathaltige Materialien, die thermisch zu Zinkoxid umgesetzt werden. Die thermische Nachbehandlung wirkt sich dabei auf die Feinteiligkeit negativ aus, da die Partikel dabei Sinterprozessen unterworfen sind, die zur Bildung mikrometergroßer Aggregate führen, die durch Mahlung nur unvollständig auf die Primärpartikel reduziert werden können.

In der DE 199 07 704 A1 wird ein nanoskaliges über eine Fällungsreaktion hergestelltes Zinkoxid beschrieben. Hierbei wird das nanoskalige Zinkoxid ausgehend von einer Zinkacetatlösung über eine alkalische Fällung hergestellt. Das abzentrifugierte Zinkoxid kann durch Zugabe von Methylenchlorid zu einem Sol redispergiert werden. Die so hergestellten Zinkoxiddispersionen besitzen aufgrund fehlender Oberflächenmodifizierung keine ausreichende Langzeitstabilität.

WO 2004/111136 A1 beschreibt ein Verfahren zur Herstellung von nanopartikulärem Zinkoxid, das mit einer organischen Säure der allgemeinen Formel $R_1$-CH=CH-$R_2$-O-$(CH_2CH_2$-$O)_n$-$CH_2$-COOH; R1 und R2 Wasserstoffatome oder unverzweigte, gesättigte, nicht-cyclische Kohlenwasserstoffreste mit einem bis 30 Kohlenstoffatomen; n=1 bis 30] oberflächenmodifiziert ist. Die Synthese des oberflächenmodifizierten Zinkoxid Partikel wird in einem 2-Stufenprozess durchgeführt, wobei in der ersten Stufe Zinkoxidpartikel durch die Fällungsreaktion von $ZnCl_2$ mit Natriumhydroxid in dem polaren Lösemittel Methanol hergestellt werden. Nach der Abtrennung der Partikel durch Zentrifugation werden diese anschließend zuerst mit Methanol und dann mit Toluol gewaschen. In der zweiten Stufe wird das gewaschene Zinkoxid in dem apolaren Lösemittel Toluol aufgenommen und mit der Carbonsäure oberflächenmodifiziert.

US 2005/0260122 A1 beschreibt ein Verfahren zur Herstellung von nanopartikulären oxidischen Teilchen (Al-, Ti-, Fe-, Cu-, Zr-Oxide und weitere, unter anderem auch ZnO) durch Vorlage einer alkalischen alkoholischen Lösung bzw. Suspension mit einem pH-Wert > 7 und Zugabe einer alkoholischen Lösung eines Metallsalzes, wobei Metallsalz-Lösungen zu alkalischen Lösungen zugegeben werden und während der ganzen Reaktion der pH-Wert > 7 gehalten wird.

Die WO 2004/052327 A2 beschreibt ein oberflächenmodfiziertes nanoskaliges Zinkoxid, wobei die Oberflächenmodifikation eine Beschichtung mit einer organischen Säure der allgemeinen Formel HOOC-$R_1$-$(CH_2)_n$-$R_2$-$CH_3$, mit $R_1$=$CH_2$-(O-$CH_2$-$CH_2)_m$ mit m=0 bis 11, n=0 bis 30, wobei wenn m=0 ist, n größer als 11 ist und $R_2$=$CH_2$, $CHCH_3$, $C(CH_3)_2$, Phenylen, O, S. Diese oberflächenmodifizierten Zinkoxide bilden gemäß der WO 2004/052327 A2 in einem flüssigen Medium stabile Dispersionen. Die Herstellung eines oberflächenmodifizierten nanoskaligen Zinkoxids erfolgt entsprechend Beispiel 1 der WO 2004/052327 A2 ausgehend von $ZnCl_2$ durch Zugabe von NaOH in Methanol. Der entstandene Niederschlag aus NaCl und ZnO wird aufbereitet und in THF mit Isostearinsäure versetzt. NaCl verbleibt als unlöslicher Niederschlag, während das obeflächenmodifizierte Zinkoxid in Lösung überführt und abgetrennt wird.

JP 04-357114 beschreibt Verfahren zur Herstellung von nanoskaligem ZnO mit einer Teilchengröße von weniger als 50 nm durch Hydrolyse eines Zn-Salzes in einer alkoholischen Lösung bzw. in einer Mischung eines Alkohols und Wasser bei einer Temperatur ≥ 60°C und einem pH-Wert ≥ 9. Ist die Reaktionstemperatur ≤ 60 °C oder der pH-Wert ≤ 9, bildet sich ein ZnO-Hydrosol. Bei Bedarf kann eine Oberflächenmodifizierung in organischem Lösungsmittel durchgeführt werden.

JP 11-279524 beschreibt ein Verfahren zur Herstellung einer Dispersion von nanopartikulären ZnO-Teilchen mit Teilchengrößen zwischen einem und 20 nm durch Mischung einer ethanolischen Lösung eines Zn-Salzes mit einer ethanolischen Lösung eines Alkalis bei einem pH-Wert ≤ 8. Bei Bedarf kann anschließend eine in Ethanol lösliche hydrophobe Verbindung mit einer polaren Gruppe (z. B. Ölsäure, Stearinsäure) beigemengt werden.

WO 00/50503 A1 beschreibt nanoskalige Zinkoxid-Gele enthaltend ZnO-Teilchen kleiner 15 nm, die durch

basische Hydrolyse einer Zn-Verbindung in Alkohol (bzw. in einem Alkohol-Wasser-Gemisch) hergestellt werden. Die Hydrolyse wird ggf. zusammen mit geeigneten Oberflächenmodifikatoren durchgeführt. Das Verfahren ist dadurch gekennzeichnet, dass man die bei der Hydrolyse entstehende Fällung reifen lässt, bis das ZnO komplett ausgeflockt ist, dieses dann zu einem Gel verdichtet und von der überstehenden Phase (Nebenprodukten) abtrennt.

In den erwähnten Verfahren des Standes der Technik erfolgt die Herstellung der ZnO-Teilchen teilweise ohne Stabilisierung der dispergierten oder redispergierten Teilchen. In einigen Fällen wird jedoch eine Stabilisierung der Teilchen durch Oberflächenmodifikation erreicht. Die zur Herstellung der modifizierten ZnO-Teilchen im Stand der Technik vorgeschlagenen Verfahren umfassen häufig eine Vielzahl von Trenn- und Reinigungsschritten. Es existiert das Bedürfnis die Langzeitstabilität von, mit vereinfachten Verfahren hergestellten ZnO-Teilchen, insbesondere in Dispersionen oder Suspensionen zu verbessern.

Weiterhin tritt bei der Ausrüstung von unbelebten organischen Materialien, insbesondere Kunststoffen, mit funktionellen Additiven, beispielsweise mit UV-Absorbern häufig das Problem auf, dass die funktionellen Additive im Laufe der Zeit die Polymermatrix verlassen, beispielsweise indem sie an die Oberfläche des Polymeren wandern (Migration). Weiterhin existiert daher das Bedürfnis die Stabilität (Lebensdauer) funktioneller Additive in unbelebten organischen Polymeren zu erhöhen.

Der vorliegenden Erfindung lag daher die Aufgabe zu Grunde, Verfahren zur Herstellung modifizierter ZnO-Teilchen zur Verfügung zu stellen, die auf einer einfachen und kontrollierten Herstellung beruhen und dabei mit möglichst wenigen Trenn- und Reinigungsschritten auskommen. Eine weitere Aufgabe der Erfindung war es, weitere und verbesserte Herstellungsverfahren zu finden, die den effizienten Zugang zu migrationsstabilen funktionalen Additiven mit erhöhter Stabilität ermöglichen.

Diese und andere Aufgaben werden, wie aus dem Offenbarungsgehalt der vorliegenden Erfindung ersichtlich, durch die verschiedenen Ausführungsformen des erfindungsgemäßen Verfahrens, die im Weiteren beschrieben sind, gelöst.

Es wurde überraschender Weise gefunden, dass diese Aufgaben gelöst werden durch ein Verfahren zur Herstellung von modifizierten ZnO-Teilchen bei dem ein Zink-Salz und eine Base in einem polaren Lösungsmittel vermischt werden und gegebenenfalls nach dem Ausfallen eines Fällungsprodukts das polare Lösungsmittel durch Destillation, Filtration, Zentrifugation oder Abdekantieren entfernt wird und ein Rückstand erhalten wird, der neben dem Zinkoxid gegebenenfalls weitere Nebenprodukte enthält, wobei das Verfahren folgende Schritte umfasst,

a. dieser Rückstand, der neben dem Zinkoxid gegebenenfalls weitere Nebenprodukte enthält, in einem unpolaren Lösungsmittel aufgenommen wird,
b. oberflächenaktive Substanzen zugegeben werden,
c. optional weitere Effektstoffe zugegeben werden und anschließend
d. die modifizierten ZnO-Teilchen von Nebenprodukten abgetrennt werden.

Ausdrücke der Form $C_a$-$C_b$ bezeichnen im Rahmen dieser Erfindung chemische Verbindungen oder Substituenten mit einer bestimmten Anzahl von Kohlenstoffatomen. Die Anzahl an Kohlenstoffatomen kann aus dem gesamten Bereich von a bis b, einschließlich a und b gewählt werden, a ist mindestens 1 und b immer größer als a. Eine weitere Spezifizierung der chemischen Verbindungen oder der Substituenten erfolgt durch Ausdrücke der Form $C_a$-$C_b$-V. V steht hierbei für eine chemische Verbindungsklasse oder Substituentenklasse, beispielsweise für Alkylverbindungen oder Alkylsubstituenten.

Halogen steht für Fluor, Chlor, Brom, oder Iod, vorzugsweise für Fluor, Chlor oder Brom, besonders bevorzugt für Chlor.

Im Einzelnen haben die für die verschiedenen Substituenten angegebenen Sammelbegriffe folgende Bedeutung:

$C_1$-$C_{20}$-Alkyl: geradkettige oder verzweigte Kohlenwasserstoffreste mit bis zu 20 Kohlenstoffatomen, beispielsweise $C_1$-$C_{10}$-Alkyl oder $C_{11}$-$C_{20}$-Alkyl, bevorzugt $C_1$-$C_{10}$-Alkyl beispielsweise $C_1$-$C_3$-Alkyl, wie Methyl, Ethyl, Propyl, Isopropyl, oder $C_4$-$C_6$-Alkyl, n-Butyl, sec-Butyl, tert.-Butyl, 1,1-Dimethylethyl, Pentyl, 2-Methylbutyl, 1,1 Dimethylpropyl, 1,2-Dimethylpropyl, 2,2-Dimethylpropyl, 1-Ethylpropyl, Hexyl, 2-Methylpentyl, 3-Methyl-pentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Tri-methylpropyl, 1-Ethyl-1-methylpropyl, 1-Ethyl-2-methylpropyl, oder $C_7$-$C_{10}$-Alkyl, wie Heptyl, Octyl, 2-Ethyl-hexyl, 2,4,4-Trimethylpentyl, 1,1,3,3-Tetramethylbutyl, Nonyl oder Decyl sowie deren Isomere.

$C_1$-$C_{21}$-Alkylcarbonyl: ein Wasserstoffatom oder eine geradkettige oder verzweigte Alkylgruppe mit 1 bis 20 Kohlenstoffatomen (wie vorstehend genannt), welche über eine Carbonylgruppe (-CO-) angebunden ist, bevorzugt $C_1$-$C_{13}$-Alkylcarbonyl wie beispielsweise Formyl, Acetyl, n-oder iso-Propionyl, n-, iso-, sec- oder tert.-Butanoyl, n-iso-, sec- oder tert.-Pentanoyl, n- oder iso-Nonanoyl, n-Dodecanoyl.

Aryl: ein ein- bis dreikerniges aromatisches Ringsystem enthaltend 6 bis 14 Kohlenstoffringglieder, z. B. Phenyl, Naphthyl oder Anthracenyl, bevorzugt ein ein- bis zweikerniges, besonders bevorzugt ein einkerniges aromatisches Ringsystem.

Aryloxy ist ein ein- bis dreikerniges aromatisches Ringsystem (wie vorstehend genannt), welches über ein Sauerstoffatom (-O-) angebunden ist, bevorzugt ein ein- bis zweikerniges, besonders bevorzugt ein einkerniges aromatisches Ringsystem.

Arylalkyl ist ein ein- bis dreikerniges aromatisches Ringsystem (wie vorstehend genannt), welches über eine $C_1$-$C_{20}$-Alkylengruppe angebunden ist, bevorzugt ein ein- bis zweikerniges, besonders bevorzugt ein einkerniges aromatisches Ringsystem.

$C_1$-$C_{20}$-Alkylen: geradkettige oder verzweigte Kohlenwasserstoffreste mit 1 bis 20 Kohlenstoffatomen, beispielsweise $C_1$-$C_{10}$-Alkylen oder $C_{11}$-$C_{20}$-Alkylen, bevorzugt $C_1$-$C_{10}$-Alkylen, insbesondere Methylen, Dimethylen, Trimethylen, Tetramethylen, Pentamethylen oder Hexamethylen.

Heterocyclen: fünf- bis zwölfgliedrige, bevorzugt fünf- bis neungliedrige, besonders bevorzugt fünf- bis sechsgliedrige, Sauerstoff-, Stickstoff- und/oder Schwefelatome, gegebenenfalls mehrere Ringe aufweisende Ringsysteme wie Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl.

$C_1$-$C_{20}$-Alkoxy bedeutet eine geradkettige oder verzweigte Alkylgruppe mit 1 bis 20 Kohlenstoffatomen (wie vorstehend genannt), welche über ein Sauerstoffatom (-O-) an gebunden sind, beispielsweise $C_1$-$C_{10}$-Alkoxy oder $C_{11}$-$C_{20}$-Alkoxy, bevorzugt $C_1$-$C_{10}$-Alkyloxy, insbesondere bevorzugt $C_1$-$C_3$-Alkoxy, wie beispielweise Methoxy, Ethoxy, Propoxy.

Heteroatome sind bevorzugt Sauerstoff-, Stickstoff-, Schwefel- oder Phosphoratome, deren freie Valenzen gegebenenfalls durch Wasserstoff abgesättigt sind.

Unter "Nanopartikeln" werden im Rahmen dieser Anmeldung Teilchen verstanden, die eine Teilchengröße von 1 nm bis 500 nm aufweisen. Für den Begriff (Nano)partikel wird auch der Begriff "(Nano)teilchen" benutzt.

Zur Bestimmung der Teilchengröße von Nanopartikeln, insbesondere auch von nanopartikulärem modifizierten ZnO, stehen dem Fachmann eine Reihe verschiedener Methoden zur Verfügung, die von der Zusammensetzung der Teilchen abhängen und teilweise voneinander abweichende Resultate bezüglich der Teilchengröße liefern können. Beispielsweise kann die Teilchengröße durch Messungen mit Hilfe einesTransmissionselektronenmikroskops (TEM), dynamischer Lichtstreuung (DLS) oder Messungen der UV Absorptionswellenlänge bestimmt werden. Teilchengrößen werden im Rahmen der vorliegenden Anmeldung, wenn möglich, mit Hilfe der Messungen eines Transmissionselektronenmikroskops (TEM) bestimmt. Bei einer ideal kugelförmigen Gestalt der Nanopartikel würde die Teilchengröße dem Teilchendurchmesser entsprechen. Selbstverständlich können die eventuell in Folge einer Aneinanderlagerung von Nanoteilchen entstandenen Agglomerate, der zunächst entstandenen Primärteilchen, auch größer als 500 nm sein.

Der Begriff "ZnO-Teilchen" bezieht sich auf Teilchen, die im Wesentlichen aus Zinkoxid bestehen, wobei diese Teilchen, abhängig von den jeweiligen Umgebungsbedingungen auch eine gewisse Hydroxid-Konzentration an ihrer Oberfläche aufweisen können, wie dem Fachmann aus dem Stand der Technik bekannt ist (Dissertation, B. Rohe, "Charakterisierung und Applikationen von unbeschichteten, silan-beschichteten und UVmodifizierten Nano-Zinkoxiden", Universität Duisburg-Essen, 2005, S. 49, 90 - Synthese,). Mitunter handelt es sich daher bei den ZnO-Teilchen um ZnO/ Zinkhydroxid/Zinkoxid-Hydrat-Teilchen. Bevorzugt handelt es sich bei den ZnO-Teichen um Nanopartikel. Darüber hinaus können sich beispielsweise abhängig von der Natur des Zink-Salzes Anionen des Zink-Salzes auf der ZnO-Oberfläche befinden, beispielsweise Acetat-Gruppen im Falle des Einsatzes von $Zn(OAc)_2$ bzw. $Zn(OAc)_2$-Dihydrat (vgl. Sakohara et al. J. Chem. Eng. Jap. 2001, 34, 15-21; Anderson et al. J. Phys. Chem. B 1998, 102, 10169-10175, Sun et al. J. Sol-Gel Sci. Technol. 2007, 43, 237 - 243). Besonders bevorzugt weisen die ZnO-Teilchen einen Teilchendurchmesser von weniger als 100 nm und insbesondere von weniger als 30 nm auf. ZnO-Teilchen werden im Rahmen dieser Erfindung auch als Zinkoxid-Teilchen bezeichnet.

Der Begriff "modifizierte ZnO-Teilchen" bezeichnet ZnO-Teilchen, die mit oberflächenaktiven Substanzen und optional weiteren Effektstoffen in Wechselwirkung stehen. Die Art der Wechselwirkung ist dabei grundsätzlich beliebig. Bevorzugt erfolgt jedoch die Wechselwirkung über eine chemische Anbindung der oberflächenaktiven Substanzen oder optional der weiteren Effektstoffe an die ZnO-Teilchen. Weiterhin bevorzugt handelt es sich um eine ionische Wechselwirkung (Coulomb-Wechselwirkung), um eine Wechselwirkung über Wasserstoffbrückenbindungen und/oder um eine Dipol-/Dipol-Wechselwirkung. Selbstverständlich kann es sich bei der Wechselwirkung auch um eine Kombination der oben genannten Möglichkeiten handeln. Bevorzugt handelt es sich bei den modifizierten ZnO-Teichen um Nanopartikel. Besonders bevorzugt weisen die modifizierten ZnO-Teilchen einen Teilchendurchmesser von weniger als 100 nm und

insbesondere von weniger als 30 nm auf.

Der Begriff "Lösungsmittel" wird im Rahmen dieser Erfindung stellvertretend auch für Verdünnungsmittel gebraucht. Die im Lösungsmittel gelösten Verbindungen liegen entweder molekular gelöst, suspendiert, in dispergierter oder in emulgierter Form im Lösungsmittel oder in Kontakt mit dem Lösungsmittel vor. Unter Lösungsmittel sind selbstverständlich auch Mischungen von Lösungsmitteln zu verstehen.

"Flüssige Formulierungen" der modifizierten ZnO-Teilchen sind Lösungen, Dispersionen oder Suspensionen der modifizierten ZnO-Teilchen.

"Feste Formulierungen" der modifizierten ZnO-Teilchen sind Festphasenmischungen enthaltend modifizierte ZnO-Teilchen, beispielsweise Dispersionen der modifizierten ZnO-Teilchen in einer polymeren Matrix, wie beispielsweise in Polymeren, oligomeren Olefinen, Wachsen, z.B. Luwax®, oder in einem Masterbatch.

Alle Löslichkeiten sind gemessen bei Raumtemperatur (21 °C) und Standarddruck (1 atm). Verfahren zur Bestimmung der Löslichkeit sind dem Fachmann aus dem Stand der Technik vertraut und eine Vielzahl von Löslichkeitsdaten ist bekannt.

Das im Rahmen des erfindungsgemäßen Verfahrens eingesetzte Zinksalz ist grundsätzlich beliebiger Natur, unter der Bedingung, dass sich das Zinksalz im eingesetzten polaren Lösungsmittel zumindest teilweise (> 0,1 g/l) löst. Bevorzugt löst sich das Zinksalz zum größten Teil im polaren Lösungsmittel (> 1 g/l) und insbesondere erfolgt eine vollständige Lösung (> 10 g/l) des Zinksalzes im polaren Lösungsmittel. Die Löslichkeit der Zinksalze im polaren Lösungsmittel kann vom Fachmann routinemäßig bestimmt werden. Selbstverständlich lassen sich auch Mischungen verschiedener Zinksalze einsetzen. Viele Zinksalze sind kommerziell erhältlich.

Bevorzugt werden als Zinksalz anorganische Zinksalze eingesetzt. Besonders bevorzugt werden als Zinksalz Zinkacetat, Zinkacetat-dihydrat oder Zinkhalogenid, insbesondere Zinkchlorid eingesetzt. Zinksalze können auch in-situ durch Auflösen von ZnO in entsprechenden Säure erzeugt werden.

In einer weiteren bevorzugten Ausführungsform des erfindungsgemäßen Verfahrens wird als Zinksalz ein organisches Zinksalz eingesetzt. Besonders bevorzugt wird als organisches Zinksalz ein Zinksalz einer gesättigten und oder ungesättigten Carbonsäure mit 10 bis 30 Kohlenstoffatomen, insbesondere von 12 bis 20 eingesetzt. Insbesondere handelt es sich bei dem organischen Zinksalz um Zinklaurat, Zinkmyristat, Zinkpalmitat, Zinkoleat, Zinkstearat, Zinkisostearat, Zinklinolenat, Zinklinolat, Zinkricinoleat. Ganz besonders bevorzugt wird Zinkoleat eingesetzt.

In einer weiteren bevorzugten Ausführungsform des erfindungsgemäßen Verfahrens wird als Zinksalz eine Mischung von anorganischen und organischen Zinksalzen eingesetzt. Bevorzugt beträgt hierbei das molare Mischungsverhältnis des anorganischen zum organischen Zinksalz von 1 : 1 bis 20 : 1, besonders bevorzugt von 2 : 1 bis 9 : 1 bezogen auf Zn. Besonders bevorzugt kommt eine Mischung von Zinkchlorid mit Zinkoleat oder Zinkacetat-Dihydrat mit Zinkoleat zum Einsatz.

Die im Rahmen des erfindungsgemäßen Verfahrens eingesetzte Base ist grundsätzlich beliebiger Natur, unter der Bedingung, dass sich die Base im eingesetzten polaren Lösungsmittel zumindest teilweise löst (> 0,1 g/l). Bevorzugt löst sich die Base zum größten Teil (> 1 g/l) im polaren Lösungsmittel und insbesondere erfolgt eine vollständige Lösung (> 10 g/l) der Base im polaren Lösungsmittel. Die Löslichkeit der Base im polaren Lösungsmittel kann vom Fachmann routinemäßig bestimmt werden. Selbstverständlich lassen sich auch Mischungen verschiedener Basen einsetzen. Viele Basen sind kommerziell erhältlich.

Bevorzugt wird als Base Alkalihydroxid, Erdalkalihydroxid oder Ammoniumhydroxid eingesetzt. Besonders bevorzugt kommt ein Alkalihydroxid, insbesondere Lithiumhydroxid, Natriumhydroxid oder Kaliumhydroxid zum Einsatz.

In einer weiteren bevorzugten Ausführungsform des erfindungsgemäßen Verfahrens wird als Base ein Alkalisalz einer organischen Säure eingesetzt. Besonders bevorzugt wird als organisches Alkalisalz ein Alkalisalz einer gesättigten und oder ungesättigten Carbonsäure mit 10 bis 30 Kohlenstoffatomen, insbesondere von 12 bis 20 eingesetzt. Insbesondere handelt es sich bei dem organischen Alkalisalz um Natrium bzw. Kaliumlaurat, Natrium bzw. Kaliummyristat, Natrium bzw. Kaliumpalmitat, Natrium bzw. Kaliumoleat, Natrium bzw. Kaliumstearat, Natrium bzw. Kaliumisostearat, Natrium bzw. Kaliumlinolenat, Natrium bzw. Kaliumlinolat, Natrium bzw. Kaliumricinoleat. Ganz besonders bevorzugt werden Natrium bzw. Kaliumoleat eingesetzt.

In einer weiteren bevorzugten Ausführungsform des erfindungsgemäßen Verfahrens wird als Base eine Mischung aus Alkalihydroxid und eines Alkalisalzes einer organischen Säure eingesetzt. Bevorzugt beträgt hierbei das molare Mischungsverhältnis des Alkalihydroxids zum Alkalisalz der organischen Säure von 1 : 1 bis 20 : 1, besonders bevorzugt von 2 : 1 bis 9 : 1 bezogen auf Alkalimetall. Besonders bevorzugt kommt eine Mischung von Natriumhydroxid mit Natriumacetat oder Natriumoleat bzw. Kaliumhydroxid mit Kaliumacetat bzw. Kaliumoleat zum Einsatz.

Als polare Lösungsmittel sind im Rahmen des erfindungsgemäßen Verfahrens alle Lösungsmittel mit einer Dielektrizitätskonstante größer 10, bevorzugt größer 15, geeignet, unter der Bedingung, dass sich das Zinksalz und die Base, wie oben beschrieben zumindest teilweise im Lösungsmittel lösen. Im Allgemeinen entsteht in Gegenwart des Zinksalzes und der Base Zinkoxid, insbesondere ZnO-Teilchen und gegebenenfalls weitere Nebenprodukte.

Das Zinksalz und die Base können entweder gemeinsam, gleichzeitig oder nacheinander, dem polaren Lösungsmittel zugegeben werden, oder es können jeweils eine Lösung des Zinksalzes und der Base getrennt hergestellt

und danach miteinander vermischt werden.

In einer bevorzugten Ausführungsform des erfindungsgemäßen Verfahrens wird das Zink-Salz bei erhöhter Temperatur im polaren Lösungsmittel gelöst, besonders bevorzugt bei einer Temperatur größer 40°C, insbesondere bei einer Temperatur größer 50°C. Die Temperatur bei der das Zink-Salz im polaren Lösungsmittel gelöst wird liegt hierbei im Allgemeinen unter der Siedetemperatur des polaren Lösungsmittels bzw. Lösungsmittelgemisches.

In einer weiteren Ausführungsform kann auch die Base in fester Form, beispielsweise in Plättchen- oder Körnchenform zur Zinksalz-Lösung oder das Zinksalz in fester Form, beispielsweise als Zinksalzpulver zur Lösung der Base gegeben werden.

Das Mengenverhältnis von Zinksalz zu Base kann abhängig beispielsweise von der Art des Zinksalzes in einem weiten Bereich variieren. Bevorzugt wird das Mengenverhältnis so gewählt, dass sich ein Molverhältnis von Hydoxidionen zu Zink, bzw. $Zn^{2+}$, von 1,0 bis 3,0, bevorzugt von 1,5 bis 2,5 und insbesondere von 1,7 bis 2,2 ergibt.

In einer bevorzugten Ausführungsform des erfindungsgemäßen Verfahrens erfolgt die Bildung des Zinkoxids, insbesondere der ZnO-Teilchen und gegebenenfalls weiterer Nebenprodukte bei einer Temperatur im Bereich von 0 bis 200 °C. Bevorzugt erfolgt die Bildung bei Temperaturen im Bereich von 40 bis 150 °C.

Der Druck ist für die Durchführung des erfindungsgemäßen Verfahrens von untergeordneter Bedeutung. Im Allgemeinen werden alle Schritte bei einem äußeren Druck von 1 atm durchgeführt. Gegebenenfalls werden einzelne Schritte, beispielsweise Destillationsschritte bei reduziertem Druck (< 1 atm) durchgeführt.

In der Regel ist das, im Rahmen des erfindungsgemäßen Verfahrens entstandene Zinkoxid im polaren Lösungsmittel zumindest teilweise unlöslich (< 1 g/l) und es bildet sich ein Fällungsprodukt. Bevorzugt ist das Zinkoxid im polaren Lösungsmittel größtenteils (< 0,5 g/l), insbesondere vollständig (< 0,1 g/l) unlöslich, damit das Ausfallen des Fällungsproduktes möglichst vollständig abläuft. Im Allgemeinen enthält das Fällungsprodukt neben dem Zinkoxid auch noch weitere Nebenprodukte. Diese Nebenprodukte können im polaren Lösungsmittel löslich, teilweise unlöslich (< 1 g/l), größtenteils (< 0,5 g/l) oder vollständig (< 0,1 g/l) unlöslich sein. Es ist ein Vorteil des erfindungsgemäßen Verfahrens, dass eine Abtrennung der weiteren Nebenprodukte, unabhängig von deren Löslichkeit im polaren Lösungsmittel effizient, beispielsweise ohne den Einsatz von großen Mengen Lösungsmittel, erfolgen kann.

Als polares Lösungsmittel werden bevorzugt Wasser, alkoholische Lösungsmittel, wässrige Lösungsmittel oder auch Alkohol/Wasser Gemische eingesetzt. Besonders bevorzugt kommen als Lösungsmittel Methanol, Ethanol, 1-Propanol, 2-Propanol, Wasser oder Gemische aus Methanol, Ethanol, 1-Propanol, 2-Propanol und Wasser zum Einsatz.

Das Mengenverhältnis zwischen polarem Lösungsmittel und Zinksalz bzw. Base kann, im Rahmen des erfindungsgemäßen Verfahrens, beispielsweise abhängig vom jeweiligen Lösungsmittel über einen weiten Bereich eingestellt werden. In der Regel wird das Lösungsmittel im Überschuss eingesetzt. Bevorzugt wird die Menge an Lösungsmittel so gewählt, dass sich eine Konzentration an gelöstem Zink, bzw. $Zn^{2+}$, von 0,1 bis 2 mol/Liter, besonders bevorzugt von 0,2 bis 1 mol/Liter ergibt.

Nach der Bildung des Zinkoxids, insbesondere von ZnO-Teilchen und gegebenenfalls von weiteren Nebenprodukten wird das polare Lösungsmittel entfernt und ein Rückstand erhalten, der neben dem Zinkoxid gegebenenfalls weitere Nebenprodukte enthält.

In einer bevorzugten Ausführungsform des efindungsgemäßen Verfahrens erfolgt das Ausfallen des Fällungsprodukts teilweise oder vollständig während der Entfernung des polaren Lösungsmittels.

Das Entfernen des polaren Lösungsmittels, bei dem der Rückstand enthaltend Zinkoxid, insbesondere ZnO-Teilchen und gegebenenfalls weitere Nebenprodukte erhalten wird, erfolgt durch Destillation, Filtration, Zentrifugation oder Abdekantieren. Besonders bevorzugt ist die Destillation.

Im Rahmen des erfindungsgemäßen Verfahrens wird (Schritt a.) der Rückstand enthaltend Zinkoxid, insbesondere ZnO-Teilchen und gegebenenfalls weitere Nebenprodukte in einem unpolaren Lösungsmittel aufgenommen und es werden (Schritt b.) oberflächenaktive Substanzen zugegeben. Bevorzugt erfolgt die Aufnahme des Zinkoxids im unpolaren Lösungsmittel (Schritt a.) bei einer Temperatur gewählt aus dem Bereich von 20°C bis zur Siedetemperatur des Lösungsmittels. Die Zugabe der oberflächenaktiven Substanzen erfolgt in der Regel ebenfalls in diesem Temperaturbereich (Schritt b.). Bevorzugt erfolgt eine weitere Umsetzung des Zinkoxids mit der oberflächenaktiven Substanz, um eine erhöhte Wechselwirkung der ZnO-Teilchen mit der oberflächenaktiven Substanz zu ermöglichen, besonders bevorzugt bei erhöhter Temperatur, insbesondere bei einer Temperatur gewählt aus dem Bereich von 50°C bis zur Siedetemperatur des unpolaren Lösungsmittels.

Als unpolare Lösungsmittel kommen grundsätzlich alle Lösungsmittel mit einer Dielektrizitätskonstante von weniger als 5, bevorzugt von weniger als 2,5 in Frage. Selbstverständlich ist auch der Einsatz von Mischungen unpolarer Lösungsmittel möglich. Bevorzugt kommen als unpolare Lösungsmittel aromatische, z.B. Benzol, Naphthalin, oder aliphatische Kohlenwasserstoffe, z.B. Pentan, Hexan, in Frage. Besonders bevorzugt sind Alkylaromaten oder deren Mischungen, beispielsweise Toluol, o-, m-, p-Xylol, Solvesso 100. Unpolare Lösungsmittel sind im Allgemeinen kommerziell erhältlich.

Das Mengenverhältnis zwischen unpolarem Lösungsmittel und Rückstand (Zinkoxid, gegebenenfalls mit weiteren Nebenprodukten), kann im Rahmen des erfindungsgemäßen Verfahrens (Schritt a.), beispielsweise abhängig vom

jeweiligen Lösungsmittel über einen weiten Bereich eingestellt werden. In der Regel wird das unpolare Lösungsmittel im Überschuss eingesetzt. Bevorzugt wird die Menge an unpolarem Lösungsmittel so gewählt, dass sich ein Gehalt an Rückstand (Zinkoxid, gegebenenfalls mit weiteren Nebenprodukten), von 0,5 bis 20 Gew.-%, besonders bevorzugt von 1,0 bis 10 Gew.-%, bezogen auf die Gesamtmenge an unpolarem Lösungsmittel und Rückstand ergibt.

Als oberflächenaktive Substanzen werden im Rahmen des erfindungsgemäßen Verfahrens (Schritt b.) bevorzugt Substanzen mit einem HLB-Wert (nach Griffin) von 0 bis 9, insbesondere von 0,5 bis 5 eingesetzt. Besonders bevorzugt werden als oberflächenaktive Substanzen ionische, nicht-ionische, betainische, zwitterionische Tenside, eingesetzt, insbesondere anionische Tenside. Oberflächenaktive Substanzen sind im Allgemeinen kommerziell erhältlich und können selbstverständlich als Mischungen eingesetzt werden.

Selbstverständlich können die oberflächenaktive Substanz zusätzlich noch weitere Funktionalitäten, insbesondere die Funktionalitäten der optionalen weiteren Effektstoffe, aufweisen. Beispielsweise, können als oberflächenaktive Substanzen Verbindungen eingesetzt werden, die bevorzugt einen HLB-Wert (nach Griffin) von 0 bis 9 aufweisen, und zusätzlich als UV-Absorber und/oder Stabilisator fungieren. Ganz bevorzugt fungieren in einer Ausführungsform des erfindungsgemäßen Verfahrens die oberflächenaktiven Substanzen zusätzlich als UV-Absorber.

Die Menge an oberflächenaktiven Substanzen, kann abhängig beispielsweise vom jeweiligen unpolaren Lösungsmittel in einem weiten Bereich variieren. Bevorzugt werden im Rahmen des erfindungsgemäßen Verfahrens 1 - 100 Gew.-%, besonders bevorzugt 5 - 60 Gew.-% und insbesondere 10 - 30 Gew.-% oberflächenaktive Substanzen bezogen auf die Menge an Rückstand (Zinkoxid, gegebenenfalls mit weiteren Nebenprodukten) eingesetzt.

In einer Ausführungsform des erfindungsgemäßen Verfahrens werden als oberflächenaktive Substanzen bevorzugt Carbonsäuren mit 10 bis 30 Kohlenstoffatomen, besonders bevorzugt ungesättigte und gesättigte Fettsäuren eingesetzt. Ganz besonders bevorzugt sind Ölsäure, Linolsäure, Linolensäure, Stearinsäure, Rizinölsäure, Laurinsäure, Palmitinsäure, Margarinsäure.

In einer weiteren Ausführungsform des erfindungsgemäßen Verfahrens werden bevorzugt als unpolares Lösungsmittel Alkylaromaten oder deren Mischungen (Schritt a.) und als oberflächenaktive Substanzen Carbonsäuren mit 10 bis 30 Kohlenstoffatomen (Schritt b.) eingesetzt.

Grundsätzlich treten die oberflächenaktiven Substanzen im unpolaren Lösungsmittel mit den ZnO-Teilchen, wie oben beschrieben in Wechselwirkung. Im Allgemeinen sind dabei die entstehenden modifizierten ZnO-Teilchen im unpolaren Lösungsmittel zumindestens teilweise löslich (> 1 g/l). Bevorzugt sind die modifizierten ZnO-Teilchen zum größten Teil (> 10 g/l), insbesondere vollständig (> 50 g/l) im unpolaren Lösungsmittel löslich.

Grundsätzlich sind die im Rückstand gegebenenfalls enthaltenen weiteren Nebenprodukte auch in Gegenwart der oberflächenaktiven Substanzen im unpolaren Lösungsmittel zumindest teilweise unlöslich (< 1 g/l). Bevorzugt sind die gegebenenfalls weiteren Nebenprodukte im polaren Lösungsmittel größtenteils (< 0,5 g/l), insbesondere vollständig (< 0,1 g/l) unlöslich.

Im Allgemeinen ermöglicht die oben beschriebene Unlöslichkeit der im Rückstand gegebenenfalls enthaltenen weiteren Nebenprodukte eine vereinfachte Abtrennung der modifizierten ZnO-Teilchen von den weiteren Nebenprodukten (Schritt d.). Häufig handelt es sich bei den weiteren Nebenprodukten um anorganische Nebenprodukte, insbesondere Alkali- oder Erdalkalisalze, beispielsweise Alkalihalogenide, z.B. NaCl, KCl, Alkaliacetate, Erdalkalihalogenide oder Erdalkaliacetate. Eine Entfernung dieser Nebenprodukte im Rahmen des erfindungsgemäßen Verfahrens ist in einer Reihe von Anwendungen vorteilhaft, in der Zinkoxid mit hoher Reinheit benötigt wird, beispielhaft sei hier die Verwendung von Zinkoxid als Halbleiter in Dünnschichttransistoren genannt (vgl. WO 2006/138072).

Im Allgemeinen enthalten die nach dem erfindungsgemäßen Verfahren hergestellten modifizierten ZnO-Teilchen, nach der Abtrennung von den weiteren Nebenprodukten (Schritt d.) einen Rest von weniger als 10 Gew.-% an weiteren Nebenprodukten, bezogen auf die Gesamtmenge an modifizierten ZnO-Teilchen und weiteren Nebenprodukten. Bevorzugt sind weniger als 5 Gew.-% und besonders bevorzugt weniger als 2 Gew.-% an weiteren Nebenprodukten enthalten.

Das Abtrennung der weiteren Nebenprodukte (Schritt d.) kann nach einem beliebigen Verfahren erfolgen. Bevorzugt werde die weiteren Nebenprodukte durch Filtration, Zentrifugation, Trennung in einem Scheidetrichter oder Abdekantieren entfernt. Besonders bevorzugt ist die Filtration. Ebenfalls besonders bevorzugt ist die Abtrennung im Scheidetrichter.

Nach der Abtrennung der weiteren Nebenprodukte (Schritt d.) wird im Allgemeinen eine Suspension (oder Dispersion) der modifizierten ZnO-Teilchen im unpolaren Lösungsmittel erhalten, die ein weiterer Gegenstand der vorliegenden Erfindung ist. Diese Suspension (oder Dispersion) kann direkt, in aufkonzentrierter Form, oder als flüssige Formulierung weiterverarbeitet werden oder die modifizierten ZnO-Teilchen können durch die Entfernung des unpolaren Lösungsmittels in einem weiteren optionalen Verfahrensschritt als Feststoff isoliert werden. Die Entfernung des unpolaren Lösungsmittels kann der Fachmann wie oben für das polare Lösungsmittel beschrieben durchführen.

Die als Feststoff vorliegenden modifizierten ZnO-Teilchen können beispielsweise mit Hilfe von unpolaren Lösungsmitteln wieder in flüssige Formulierungen überführt werden oder als Feststoff selbst oder in Form von festen Formulierungen weiterverarbeitet oder verwendet werden.

Selbstverständlich lassen sich an diese optionale Isolierung noch weitere Aufreinigungsschritte für die modifizierten ZnO-Teilchen, beispielsweise durch Waschvorgänge anschließen.

Ein weiterer Gegenstand der vorliegenden Erfindung sind Materialien, insbesondere Kunststoffe, Lacke oder Farben, die erfindungsgemäß hergestellte modifizierte ZnO-Teilchen enthalten. Unter Materialien sind im Rahmen dieser Anmeldung unbelebte Materialien zu verstehen. Bevorzugt sind als Materialien Kunststoffe zu nennen. Kunststoffe werden im Rahmen dieser Anmeldung auch als Polymere bezeichnet.

Die Einarbeitung der modifizierten ZnO-Teilchen in Materialien erfolgt analog bekannter Verfahren zur Einarbeitung von ZnO-Teilchen in Materialien. Beispielsweise seien hier die Ausrüstung von Polymeren (Kunststoffen) mit Zinkoxid während eines Extrusionsschrittes oder die Herstellung von festen oder flüssigen kosmetischen Formulierungen enthaltend Zinkoxid genannt.

Optional werden im Rahmen des erfindungsgemäßen Verfahrens (Schritt c.) weitere Effektstoffe zugegeben. Grundsätzlich ist die Natur der weiteren Effektstoffe beliebig, unter der Bedingung, dass sie mit den modifizierten ZnO-Teilchen in Wechselwirkung treten. Die Wechselwirkung mit den modifizierten ZnO-Teilchen erfolgt analog dem bereits für die Wechselwirkung zwischen oberflächenaktiven Substanzen und ZnO-Teilchen gesagten. Im Weiteren werden, wie oben bereits beschrieben, sowohl ZnO-Teilchen in Wechselwirkung mit oberflächenaktiven Substanzen, als auch ZnO-Teilchen in Wechselwirkung mit oberflächenaktiven Substanzen und Effektstoffen als modifizierte ZnO-Teilchen bezeichnet. Die Zugabe der weiteren Effektstoffe erfolgt in der Regel im Bereich von 20°C bis zur Siedetemperatur des unpolaren Lösungsmittels. Bevorzugt erfolgt eine weitere Umsetzung des Zinkoxids mit den weiteren Effektstoffen, um eine erhöhte Wechselwirkung der ZnO-Teilchen mit weiteren Effektstoffen zu ermöglichen, besonders bevorzugt bei erhöhter Temperatur, insbesondere bei einer Temperatur gewählt aus dem Bereich von 50°C bis zur Siedetemperatur des unpolaren Lösungsmittels.

Die weiteren Effektstoffe werden eingesetzt um den modifizierten ZnO-Teilchen eine zusätzliche Funktionalität zu verleihen, die sie für eine spätere Anwendung gegebenenfalls benötigen.

Als weitere Effektstoffe können UV-Absorber, Stabilisatoren, Flammschutzmittel, Antioxidantien, Antibeschlagmittel, Gleitmittel, Antiblockiermittel, organische Farbstoffe, IR-Farbstoffe, Fluoreszenzfarbstoffe, Aufheller, Antistatikmittel, Biozide, Nukleierungsmittel, Herbizide, Fungizide oder Pestizide, Radikalfänger eingesetzt werden.

Ein weiterer Gegenstand der vorliegenden Erfindung sind Materialien, insbesondere Kunststoffe, Lacke oder Farben, insbesondere Kunststoffe, die erfindungsgemäß hergestellte modifizierte ZnO-Teilchen enthaltend weitere Effektstoffe enthalten. Die Einarbeitung dieser modifizierten ZnO-Teilchen in Materialien erfolgt analog bekannter Verfahren zur Einarbeitung von ZnO-Teilchen in Materialien. Beispielsweise seien hier die Ausrüstung von Polymeren (Kunststoffen) mit Zinkoxid während eines Extrusionsschrittes oder die Herstellung von festen oder flüssigen kosmetischen Formulierungen enthaltend Zinkoxid genannt.

Bevorzugt werden im Rahmen des erfindungsgemäßen Verfahrens in Schritt c. als optionale weitere Effektsoffe UV-Absorber oder Radikalfänger eingesetzt.

In einer bevorzugten Ausführungsform des erfindungsgemäßen Verfahrens werden als optionale weitere Effektstoffe Verbindungen der allgemeinen Formel (I) oder (II) eingesetzt:

$$Y'\text{-}Z \qquad (I)$$

oder

$$Y\text{-}Z \qquad (II).$$

Bevorzugt gehorchen die weiteren Effektstoffe der Formel Y'-Z. Hierbei bezeichnet Y' eine chemische Struktureinheit (Linker), über die, gegebenenfalls nach einer chemischen Umsetzung von Y' zu Y, die weiteren Effektstoffe mit den modifizierten ZnO-Teilchen wechselwirken, Z bezeichnet eine funktionelle Gruppe des weiteren Effektstoffes. Beispielsweise erfolgt die chemische Umsetzung des Linkers Y' zum Linker Y durch Hydrolyse. Selbstverständlich können die weiteren Effektstoffe auch mehrere Linker (Y oder Y') bzw. mehrere funktionelle Gruppen Z aufweisen.

In einer bevorzugten Ausführungsform des erfindungsgemäßen Verfahrens werden die weiteren Effektstoffe der Verbindungen der allgemeinen Formel (I) oder (II) direkt als oberflächenaktive Substanzen in Schritt b. eingesetzt.

Die Art der Wechselwirkung zwischen Y' bzw. Y mit den modifizierten ZnO-Teilchen kann für verschiedene Y und Y' sehr wie oben beschrieben unterschiedlich sein. Beispielsweise kann der Linker mit dem ZnO-Teilchen kovalent verbunden sein. Weiterhin ist auch eine elektrostatische (ionische) Wechselwirkung, eine Wechselwirkung über Dipol-Dipol Kräfte oder über Wasserstoff-Brücken Bindungen möglich. Bevorzugt tritt der Linker kovalent oder elektrostatisch

mit dem ZnO-Teilchen in Wechselwirkung. Selbstverständlich kann der Linker auch an mehreren Stellen mit dem ZnO-Teilchen in Wechselwirkung treten, beispielsweise mehrere kovalente Bindungen ausbilden, oder neben einer kovalenten Anbindung noch weitere Wechselwirkungen mit dem ZnO-Teilchen, beispielsweise über Wasserstoffbrücken haben.

Beispielsweise entspricht der Linker-Y- im Falle einer kovalenten Wechselwirkung

(L1) 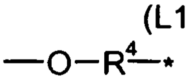 , (L2) 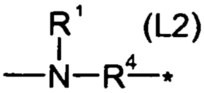 , (L3) 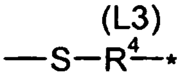 ,

(L4) 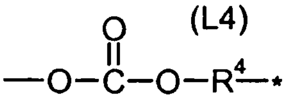 , (L5) 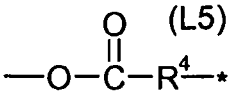 , (L6) 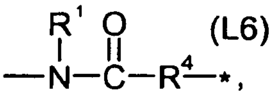 ,

(L7) 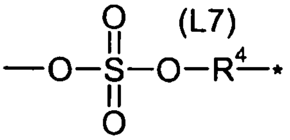 , (L8) 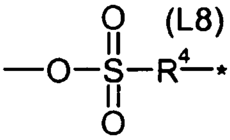 , (L9) 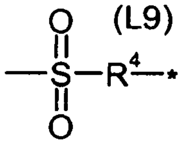 ,

(L10) 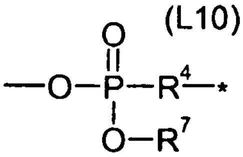 , (L11) 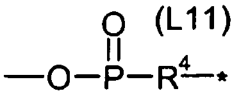 , (L12) 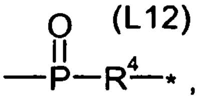 ,

(L13) 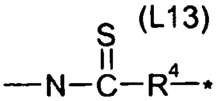 , (L14) 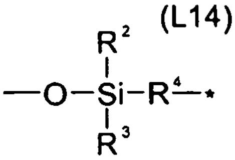 ,

(L19) 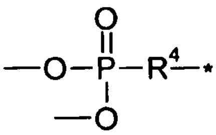 oder (L20) 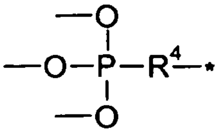 .

("*" entspricht der Anbindung an die funktionelle Gruppe Z)

Hierbei sind

| | |
|---|---|
| $R^1$ | H, $C_1$-$C_{20}$-Alkyl, Aryl, Arylalkyl, Heterocyclen, $C_1$-$C_{20}$-Alkylcarbonyl, |
| $R^2$, $R^3$ | unabhängig voneinenander OH, $C_1$-$C_{20}$-Alkoxy, $C_1$-$C_{20}$-Alkyl, Aryl, Arylalkyl, Heterocyclen, |
| $R^4$ | eine chemische Einfachbindung, O, $C_1$-$C_{20}$-Alkylen, $C_1$-$C_{20}$-Alkylen-$R^5$, |
| $R^5$ | O, N, S, N($R^6$)-C=O, N-$CO_2$, $O_2C$, $CO_2$, $O_2$CN $OCO_2$, |

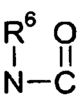 , 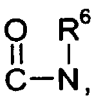 , 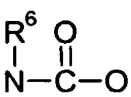 , 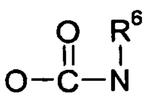 ,

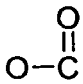, 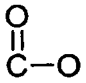, 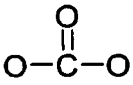, 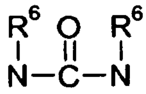

$R^6$ H, $C_1$-$C_{20}$-Alkyl,
R7 H, Metallkation,

wobei die Substituenten $R^1$ bis $R^4$ und/oder $R^6$ jeweils an beliebiger Position durch ein oder mehrere Heteroatome unterbrochen sein können, wobei die Anzahl dieser Heteroatome nicht mehr als 10, bevorzugt nicht mehr als 8, ganz besonders bevorzugt nicht mehr als 5 und insbesondere nicht mehr als 3 beträgt, und/oder jeweils an beliebiger Position, allerdings nicht mehr als fünfmal, bevorzugt nicht mehr als viermal und besonders bevorzugt nicht mehr als dreimal, durch $C_1$-$C_{20}$-Alkyl, $C_1$-$C_{20}$-Alkoxy, Aryl, Aryloxy, Heterocyclen, Heteroatome oder Halogen substituiert sein können, wobei diese ebenfalls maximal zweimal, bevorzugt maximal einmal mit den genannten Gruppen substituiert sein können. Metallkationen sind hierbei bevorzugt ein-, zwei, oder dreiwertige Metallkationen, beispielsweise, Alkali-, Erdalkali-, Erdmetall-, Überegangsmetallkationen. Insbesondere sind Metallkationen $Li^+$, $Na^+$, $K^+$, $Ca^{2+}$ und/oder $Mg^{2+}$. Bei der Wertigkeit der Metallkationen ist natürlich zu berücksichtigen, dass insgesamt die E-lektroneutralität gewährleistet bleibt. Beispielsweise neutralisiert ein zweiwertiges Metallkation zwei Linker L10. Eine Bildung von ionischen Wechselwirkungen, beispielsweise Salzbrücken, zwischen Linkern L10 ist möglich.

Bevorzugte Linker -Y- sind L1, L5, L8, L10 oder L14.

Bevorzugte Silan-Linker L14 sind

(L15)

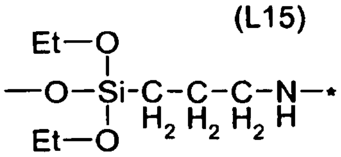

,

(L16)

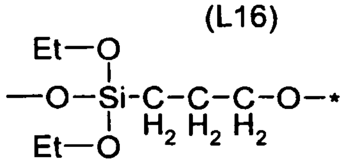

(L17)

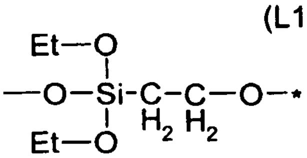

(L18)

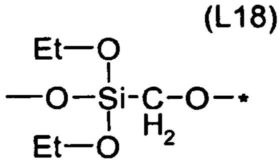

(* symbolisiert die Anbindungsstelle an die funtionelle Gruppe Z)
oder (teilweise) hydrolysierte Derivate dieser Silan-Linker L15, L16, L17 oder L18.

In einer Ausführungsform der modifizierten ZnO-Teilchen treten die weiteren Effektstoffe nicht nur mit den modifizierten ZnO-Teilchen, sondern auch untereinander in Wechselwirkung. Beispielsweise können die weiteren Effektstoffe miteinander über elektrostatische Wechselwirkungen oder Wasserstoffbrückenbindungen miteinander in Wechselwirkung treten. Ebenfalls ist es möglich, dass die weiteren Effektstoffe miteinander in einer chemischen Reaktion, vor oder nach einer möglichen chemischen Reaktion mit den ZnO-Teilchen, reagieren. Beispielsweise ist dies in Form einer Vernetzungsreaktion zwischen den weiteren Effektstoffen möglich. Bevorzugt erfolgt eine solche Vernetzung, wenn die weiteren Effektstoffe Silangruppen tragen, die zu Kondensationsreaktionen fähig sind. Die Vernetzungsreaktion kann, wenn sich die weiteren Effektstoffe an der Oberfläche der modifizierten ZnO-Teilchen befinden, zur Bildung einer vollständig vernetzten Hülle führen, oder aber auch nur teilweise vernetzte Bereiche an der Oberfläche erzeugen.

Die funktionelle Gruppe Z des weiteren Effektstoffes, kann je nach der Verwendung der modifizierten ZnO-Teilchen sehr unterschiedlich sein.

Beispielsweise umfasst die funktionelle Gruppe Z eine polymerisierbare Gruppe, beispielsweise eine ungesättigte Bindung. Damit lassen sich modifizierte ZnO-Teilchen als "Monomere" mit Hilfe einer Polymerisationsreaktion, beispielsweise radikalisch oder ionisch, in ein Polymer einbauen. Als solche polymerisierbare Gruppen sind beispielsweise geeignet Methacrylate, Acrylate, Acrylamide, Cyanacrylamide, Styrol, Substituierte Styrole, Amine, Alkohole, Urethane.

Beispielsweise umfasst die funktionelle Gruppe Z ein Chromophor, das elektromagnetische Strahlung absorbieren kann. Ein solches Chromophor ist beispielsweise in der Lage IR, sichtbares, oder UV Licht zu absorbieren. Beispielsweise kann ein solches Chromophor das absorbierte Licht anschließend wieder, gegebenenfalls bei einer anderen Wellenlänge emittieren (Fluoreszenz oder Phosphoreszenz), oder auch die aufgenommene Lichtenergie strahlungslos abgeben. Weiterhin sind auch kombinierte Prozesse aus Emission und strahlungsloser Desaktivierung möglich.

Weiterhin umfasst die funktionelle Gruppe Z neben UV-Absorbern beispielsweise Stabilisatoren, beispielsweise für organische Polymere, z.B. Radikalfänger, Antioxidantien, Hilfsmittel für organische Polymere, Flammschutzmittel, organische Farbstoffe, oder IR-Farbstoffe, Fluoreszenzfarbstoffe, optische Aufheller, Antistatitikmittel, Antiblockiermittel, Antibeschlagmittel, Nukleierungsmittel, Biozide, Pestizide, Fungizide oder Herbizide.

Bevorzugt umfasst die funktionelle Gruppe Z ein Chromophor, das UV-Licht mit einer Wellenlänge kleiner 400 nm, insbesondere von 200 bis 400 nm, absorbiert (UV-Absorber). Ein solches Chromophor kann daher beispielsweise UV-A (von 320 bis 400 nm), UV-B (von 290 bis 319 nm) und/oder UV-C (von 200 bis 289 nm) Licht absorbieren. Bevorzugt absorbiert das Chromophor UV-A und/oder UV-B Licht. Ganz besonders bevorzugt absorbiert das Chromophor UV-A und/oder UV-B Licht und desaktiviert die aufgenommene Lichtenergie strahlungslos.

Beispielsweise entspricht die funktionelle Gruppe Z

(Z1) 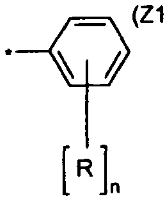 , (Z2) 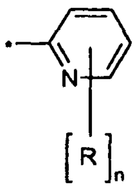 , (Z3) 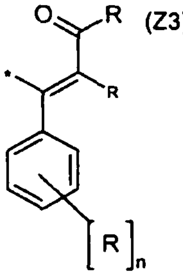 , (Z4) 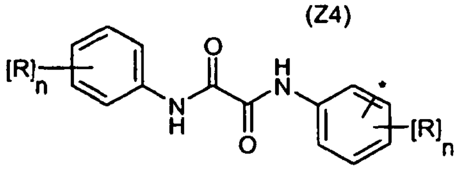

(Z5) 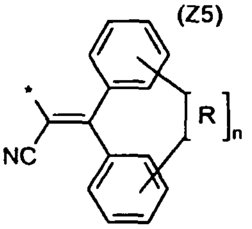 , (Z6) 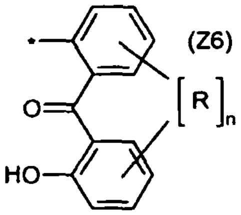 , (Z7) 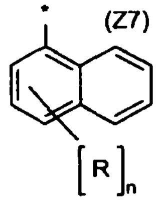 , (Z8) 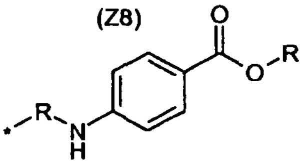

(Z9) 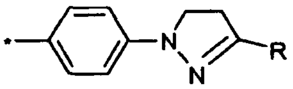 , (Z10) 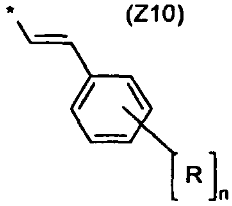 , (Z11) 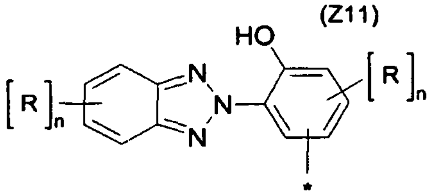 ,

(Z12) 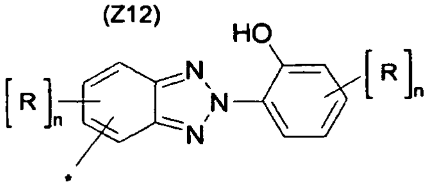 , (Z13) 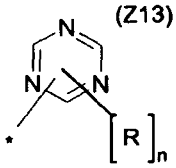 , (Z14) 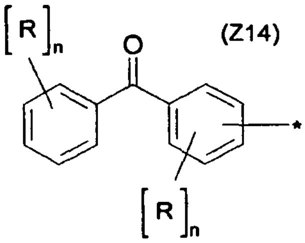 ,

(Z15) 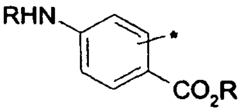 , (Z16) 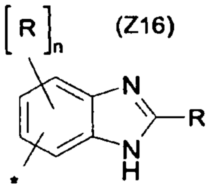 , (Z17) 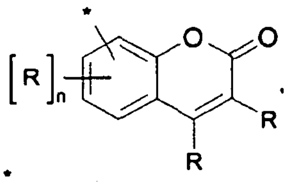 , (Z18) 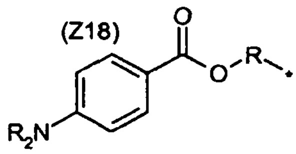

(Z19) 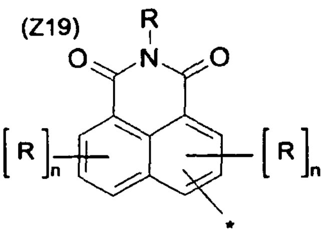 , (Z20) 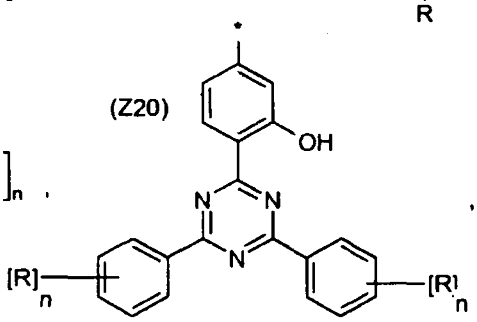 , (Z21) 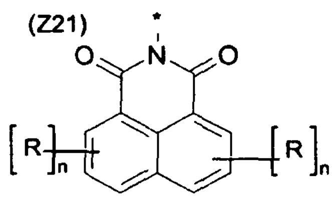 , (Z22) 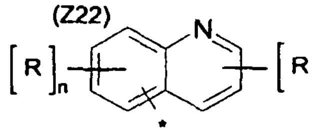

(* symbolisiert die Anbindungsstelle an den Linker Y bzw. Y')

wobei

R Halogen, Hydroxy, Phenyl, $C_1$-$C_{20}$-Alkyl, Hydroxyphenyl, $C_1$-$C_{20}$-Alkoxy, Aryl, Aryloxy, Amino, Mono- oder Dialkylamino, Nitril, Carboxylat, Ester, Thiol, Sulfoxide, Sulfonsäure, Acyl, Formyl, Carbonyloxyalkyl, Carbonylaminoalkyl,

n eine ganze Zahl aus dem Bereich von 0 bis 4

ist, und die n Substituenten R unabhängig voneinander gleich oder verschieden sein können, und wobei der Substituent R an beliebiger Position durch ein oder mehrere Heteroatome unterbrochen sein kann, wobei die Anzahl dieser Heteroatome nicht mehr als 10, bevorzugt nicht mehr als 8, ganz besonders bevorzugt nicht mehr als 5 und insbesondere nicht mehr als 3 beträgt, und/oder jeweils an beliebiger Position, allerdings nicht mehr als fünfmal, bevorzugt nicht mehr als viermal und besonders bevorzugt nicht mehr als dreimal, durch $C_1$-$C_{20}$-Alkyl, $C_1$-$C_{20}$-Alkoxy, Aryl, Aryloxy, Heterocyclen, Heteroatome oder Halogen substituiert sein kann, wobei diese ebenfalls maximal zweimal, bevorzugt maximal einmal mit den genannten Gruppen substituiert sein können.

Bevorzugt absorbieren die modifizierten ZnO-Teilchen enthaltend UV-Absorber Licht mit einer Wellenlänge aus dem Bereich von 200 bis 600 nm. Weiterhin bevorzugt weist das Absorptionsspektrum der erfindungsgemäßen Teilchen mindestens ein Absorptionsmaximum im Wellenlängenbereich von 200 bis 600 nm, insbesondere von 250 bis 400 nm, auf. Bevorzugt absorbieren erfindungsgemäße modifizierte ZnO-Teilchen UV-A und/oder UV-B Licht. Ganz besonders bevorzugt absorbieren die erfindungsgemäßen ZnO-Teilchen UV-A und/oder UV-B Licht und desaktiviert die aufgenommene Lichtenergie strahlungslos.

Als UV-Absorber werden bevorzugt diejenigen weiteren Effektstoffe verwendet, die über einen Linker Y bzw. Y' verfügen.

UV-Absorber sind häufig Handelsprodukte. Sie werden beispielsweise unter dem Warenzeichen Uvinul® von der BASF SE, Ludwigshafen, verkauft. Die Uvinul® Lichtschutzmittel umfassen Verbindungen der folgenden Klassen: Benzophenone, Benzotriazole, Cyanoacrylate, Zimtsäureester, para-Aminobenzoate, Naphthalimide. Darüber hinaus werden weitere bekannte Chromophore eingesetzt, z.B. Hydroxyphenyltriazine oder Oxalanilide. Solche Verbindungen werden beispielsweise alleine oder in Mischungen mit anderen Lichtschutzmittel in kosmetischen Anwendungen, beispielsweise Sonnenschutzmitteln oder zur Stabilisierung von organischen Polymeren eingesetzt. Weitere Beispiele für UV-Absorber sind:

substituierte Acrylate, wie z.B. Ethyl- oder Isooctyl-α-cyano-β,β-diphenylacrylat (hauptsächlich 2-Ethylhexyl-α-cyano-β,β-diphenylacrylat), Methyl-α-methoxycarbonyl-β-phenylacrylat, Methyl-α-methoxycarbonyl-β-(p-methoxyphenyl)acrylat, Methyl- oder Butyl-α-cyano-β-methyl-β-(p-methoxyphenyl)acrylat, N-(β-methoxycarbonyl-β-cyanovinyl)-2-methylindolin, Octyl-p-methoxycinnamat, Isopentyl-4-methoxycinnamat, Urocaninsäure oder deren Salze oder Ester;

Derivate der p-Aminobenzoesäure, insbesondere deren Ester z.B. 4-Aminobenzoesäure-ethylester oder ethoxylierte 4-Aminobenzoesäureethylester, Salicylate, substituierte Zimtsäureester (Cinnamate) wie Octyl-p-methoxycinnamat oder 4-Isopentyl-4-methoxycinnamat, 2-Phenylbenzimidazol-5-sulfonsäure oder ihre Salze.
2-Hydroxybenzophenonderivative, wie z.B. 4-Hydroxy-, 4-Methoxy-, 4-Octyloxy-, 4-Decyloxy-, 4-Dodecyloxy-, 4-Benzyloxy-, 4,2',4'- Trihydroxy-, 2'-Hydroxy-4,4'-dimethoxy-2-hydroxybenzophenon sowie 4-Methoxy-2-hydroxybenzophenon-Sulfonsäure-Natriumsalz;
Ester der 4,4-Diphenylbutadien-1,1-dicarbonsäure, wie z.B. der Bis(2-ethylhexyl)ester;
2-Phenylbenzimidazol-4-sulfonsäure sowie 2-Phenylbenzimidazol- 5-sulfonsäure oder deren Salze;

Derivate von Benzoxazolen;

Derivate von Benztriazolen oder 2-(2'-Hydroxyphenyl)benztriazolen, wie z.B. 2-(2H-Benztriazol-2-yl)-4-methyl-6-(2-methyl-3-((1,1,3,3-tetramethyl-1-(trimethylsilyloxy)disiloxanyl)-propyl)- phenol, 2-(2'-Hydroxy-5'-methylphenyl) benztriazol, 2-(3',5'-Di-tert.-butyl-2'-hydroxyphenyl)benztriazol, 2-(5'-tert.-Butyl-2'-hydroxyphenyl)benztriazol, 2-[2'-Hydroxy-5'-(1,1,3,3-tetramethylbutyl)phenyl]benztriazol, 2-(3',5'-Di-tert.-butyl-2'-hydroxyphenyl)-5-chlorbenztriazol, 2-(3'-tert.-Butyl-2'-hydroxy-5'-methylphenyl)-5-chlorbenztriazol, 2-(3'-sec.-Butyl-5'-tert.-butyl- 2'-hydroxyphenyl)benztriazol, 2-(2'-Hydroxy-4'-octyloxyphenyl)-benztriazol, 2-(3',5'-Di-tert.-amyl-2'-hydroxyphenyl)benztriazol, 2-[3',5'-Bis(α,α-dimethylbenzyl)-2'-hydroxyphenyl]benztriazol, 2-[3'-tert.-Butyl-2'-hydroxy-5'-(2-octyloxycarbonylethyl)phenyl]-5-chlorbenztriazol, 2-[3'-tert.-Butyl-5'-(2-(2-ethylhexyloxy)- carbonylethyl)-2'-hydroxyphenyl]-5-chlorbenztriazol, 2[3'-tert.-Butyl-2'-hydroxy-5'-(2-methoxycarbonylethyl)phenyl]-5-chlorbenztriazol, 2-[3'-tert.-Butyl-2'-hydroxy-5'-(2-methoxycarbonylethyl)phenyl]benztriazol, 2-[3'-tert.-Butyl-2'-hydroxy-5'-(2-octyloxycarbonylethyl)phenyl]benztriazol, 2-[3'-tert.-Butyl-5'-(2- (2-ethylhexyloxy)carbonylethyl)-2'-hydroxyphenyl]benztriazol, 2-(3'-Dodecyl-2'-hydroxy-5'-methylphenyl)benztriazol, 2-[3'- tert-Butyl-2'-hydroxy-5'-(2-isooctyloxycarbonylethyl)phenyl]- benztriazol, 2,2'-Methylen-bis[4-(1,1,3,3-tetramethylbutyl)-6- benztriazol-2-yl-phenol], das vollveresterte Produkt von 2-[3'- tert.-Butyl-5'-(2-methoxycarbonylethyl)-2'-hydroxyphenyl]-2H-benztriazol mit Polyethylenglycol 300, [R-CH2CH2-COO(CH2)3-]2 mit R gleich 3'-tert.-Butyl-4-hydroxy-5'-2H-benztriazol-2-ylphenyl, 2-[2'-Hydroxy-3'-(α,α-dimethylbenzyl)-5'-(1,1,3,3-tetramethylbutyl)phenyl]benztriazol, 2-[2'-Hydroxy-3'-(1,1,3,3-tetramethylbutyl)-5'-(α,α-dimethylbenzyl)phenyl]benztriazol;
Benzylidencampher oder seine Derivate, wie sie z. B. in der DE-A 38 36 630 genannt sind, z.B. 3-Benzylidencampher, 3(4'-Methylbenzyliden)d-1-campher;

α-(2-Oxoborn-3-yliden)toluol-4-sulfonsäure oder ihre Salze, N,N,N-Trimethyl-4-(2-oxoborn-3-ylidenmethyl)anilinium-monosulfat;

Dibenzoylmethane, wie z.B. 4-tert.-Butyl-4'-methoxydibenzoylmethan;

2,4,6-Triaryltriazin-Verbindungen wie 2,4,6-Tris-{N-[4-(2-ethylhex-1-yl)oxycarbonylphenyl]amino}-1,3,5-triazin, 4,4'-((6-(((tert.-Butyl)aminocarbonyl)phenylamino)-1,3,5-triazin-2,4-diyl)imino)bis(benzoesäure-2'-ethylhexylester);

2-(2-Hydroxyphenyl)-1,3,5-triazine, wie z.B. 2,4,6-Tris(2-hydroxy-4-octyloxyphenyl)1,3,5-triazin, 2-(2-Hydroxy-4-octyloxyphenyl)-4,6-bis(2,4-dimethylphenyl)-1,3,5- triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)- 1,3,5-triazin, 2-(2-Hydroxy-4-dodecyloxyphenyl)-4,6-bis(2,4-dimethylphenyl)-1,3,5-triazin, 2-[2-Hydroxy-4-(2-hydroxy-3-butyloxypropyloxy)phenyl]-4,6-bis(2,4-dimethylphenyl)-1,3,5-triazin, 2-[2-Hydroxy-4-(2-hydroxy-3-octyloxypropyloxy)phenyl]-4,6-bis-(2,4-di-methylphenyl)-1,3,5-triazin, 2-(2-Hydroxy-4-tridecyloxyphenyl)-4,6-bis(2,4-dimethylphenyl)-1,3,5-triazin, 2-[4-(Dodecyloxy/tridecyloxy-2-hydroxypropoxy)-2-hydroxyphenyl]-4,6-bis(2,4-dimethylphenyl)-1,3,5-triazin, 2-[2-Hydroxy-4(2-hydroxy-3-dodecyloxypropoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2- Hydroxy-4-methoxyphenyl)4,6-diphenyl-1,3,5-triazin, 2,4,6-Tris[2- hydroxy-4-(3-butoxy-2-hydroxypropoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

Weitere geeignete UV-Absorber kann man der Schrift Cosmetic Legislation, Vol.1, Cosmetic Products, European Commission 1999, S. 64-66 entnehmen, auf die hiermit Bezug genommen wird.

Geeignete UV-Absorber werden außerdem in den Zeilen 14 bis 30 ([0030]) auf Seite 6 der EP 1 191 041 A2 beschrieben. Auf diese wird vollinhaltlich Bezug genommen und diese Literaturstelle wird zum Offenbarungsgehalt der vorliegenden Erfindung gemacht.

Besonders bevorzugte UV-Absorber sind substituierte Zimtsäuren, Benzophenone, Benztriazole, Aminobenzoesäuren. Ganz besonders bevorzugt sind Verbindungen der allgemeinen Formel (III) - (XIII), die gegebenenfalls weiter mit Substituenten R substituiert sein können.

(III)
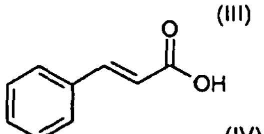

(IV)
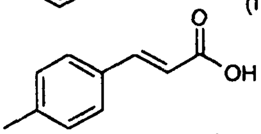

(V)
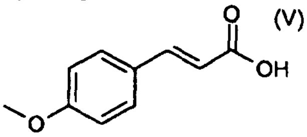

(VI)
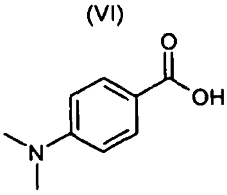

(VII)
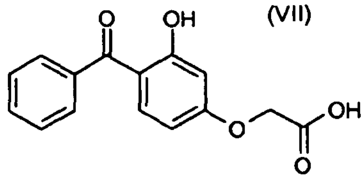

(VIII)
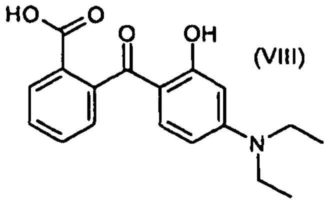

(IX)
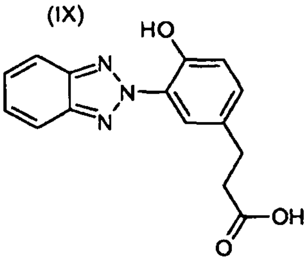

(X)
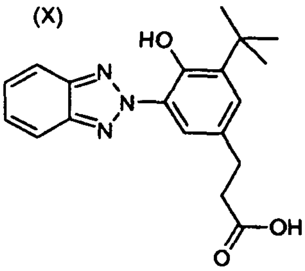

(XI)

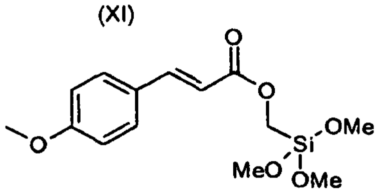

(XII)

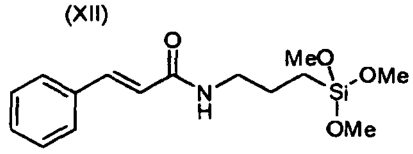

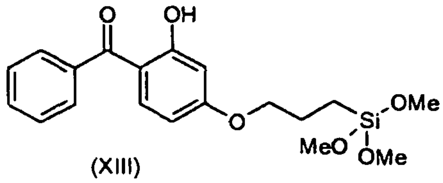

(XIII)

Ein weiterer Gegenstand der Erfindung sind erfindungsgemäß hergestellte modifizierte ZnO-Teilchen, die als weitere Effektstoffe UV-Absorber der Formeln (III) - (XIII) enthalten.

Erfindungsgemäß lassen sich daher modifizierte ZnO-Teilchen, die als weitere Effektstoffe UV-Absorber enthalten zur Stabilisierung von Materialien, insbesondere Polymeren (Kunststoffen), Lacken oder Farben, insbesondere von Kunststoffen, gegen die Einwirkung von UV-Licht verwenden.

Ein weiterer Gegenstand der vorliegenden Erfindung ist ein Verfahren zur Stabilisierung von Materialien, insbesondere Polymeren gegen die Einwirkung von Licht, Radikalen oder Hitze, wobei den Materialien, insbesondere Polymeren modifizierte ZnO-Teilchen zugesetzt werden, die als weitere Effektstoffe lichtabsorbierende Verbindungen, beispielsweise UV-Absorber und/oder Stabilisatoren, beispielsweise HALS-Verbindungen enthalten. Weiterhin lassen sich auf diese Art und Weise auch Lacke oder Farben gegen die Einwirkung von Licht, Radikalen oder Hitze stabilisieren.

Ein weiterer Gegenstand der vorliegenden Erfindung sind Materialien, insbesondere Polymere, die erfindungsgemäß hergestellte modifizierte ZnO-Teilchen enthalten, wobei bei der Herstellung der modifizierten ZnO-Teilchen als weitere Effektstoffe UV-Absorber, Stabilisatoren, Flammschutzmittel, Antioxidantien oder Radikalfänger eingesetzt sind. Ein weitere Gegenstand der Erfindung ist die Verwendung von modifizierten ZnO-Teilchen, die als weitere Effektstoffe lichtabsorbierende Verbindungen, beispielsweise UV-Absorber und/oder Stabilisatoren, beispielsweise HALS-Verbindungen enthalten zur Stabilisierung von Polymeren gegen die Einwirkung von Licht, Radikalen oder Hitze.

Die Einarbeitung der modifizierten ZnO-Teilchen, enthaltend weitere Effektstoffe, in Materialien erfolgt analog bekannter Verfahren zur Einarbeitung von ZnO-Teilchen in Materialien. Beispielsweise seien hier die Ausrüstung von Polymeren (Kunststoffen) durch ZnO während eines Extrusionsschrittes oder die Herstellung von kosmetischen Formulierungen enthaltend Zinkoxid genannt.

Die erfindungsgemäß hergestellten modifizierten ZnO-Teilchen, enthaltend UV-Absorber als Effektstoffe, haben den Vorteil, dass ihre Neigung zur Migration in Materialien, insbesondere in Polymeren sehr gering ist. Im Gegensatz zu konventionellen organischen UV-Absorbern ist daher auch der physikalische Verlust (Verlust durch Migration) der Absorber während des Gebrauchs gering.

Als weitere Effektstoffe kommen weiterhin Stabilisatoren für unbelebte organische Polymere in Betracht. Bei den Stabilisatoren handelt es sich um Verbindungen, die organische Polymere gegen den Abbau bei Einwirkung von Sauerstoff, Licht (sichtbares, infrarotes und/oder ultraviolettes Licht) oder Wärme stabilisieren. Sie werden auch als Antioxidantien oder als Lichtstabilisatoren bezeichnet, vgl. Ullmanns, Encyclopedia of Industrial Chemistry, Vol. 3, 629 - 650 (ISBN-3-527-30385-5) und EP-A 1 110 999, Seite 2, Zeile 29 bis Seite 38, Zeile 29. Mit solchen Stabilisatoren können praktisch alle organischen Polymere stabilisiert werden, vgl. EP-A 1 110 999, Seite 38, Zeile 30 bis Seite 41, Zeile 35. Diese Literaturstelle wird durch die Bezugnahme zum Offenbarungsgehalt der vorliegenden Erfindung gemacht. Die in der EP-Anmeldung beschriebenen Stabilisatoren gehören zur Verbindungsklasse der Pyrazolone, der organischen Phosphite oder Phosphonite, der sterisch gehinderten Phenole und der sterisch gehinderten Amine (Stabilisatoren des sog. HALS Typs o. HALS-Stabilisatoren, vgl. Römpp, 10. Auflage, Band 5, Seiten 4206-4207. Erfindungsgemäß lassen sich daher modifizierte ZnO-Teilchen, die als weitere Effektstoffe Stabilisatoren enthalten zur Stabilisierung von Polymeren verwenden. Als Stabilisatoren werden bevorzugt diejenigen weiteren Effektstoffe verwendet, die über einen Linker Y bzw. Y' verfügen.

Beispielsweise beträgt das Mengenverhältnis (Gewicht) von UV-Absorbern zu Stabilisatoren von 10:1 bis 1 : 10, bevorzugt von 5:1 bis 1:5, insbesondere von 2:1 bis 1:2. UV Absorber/HALS Verhältnisse sind bevorzugt gewählt aus dem Bereich von 1:2 zu 2:1.

In einer bevorzugt Ausführungsform werden Mischungen von modifizierten ZnO-Teilchen, die als weitere Effektstoffe UV-Absorber und bestimmte Hilfsmittel für organische Polymere enthalten, eingesetzt. Beispielswiese sind diese Hilfsmittel Flammschutzmittel, organische Farbstoffe, IR-Farbstoffe, Fluoreszenzfarbstoffe, optische Aufheller, Nukleierungsmittel, antimikrobielle Additive, Pestizide, Fungizide oder Herbizide. Je nach Anwendungsgebiet kann das

Verhältnis von Hilfsmitteln zu UV-Absorbern stark variieren. Beispielsweise beträgt das Verhältnis von UV-Absorbern zu Hilfsmitteln von 10:1 bis 1:10, bevorzugt von 5:1 bis 1:5, insbesondere von 2:1 bis 1:2. Als weitere Effektstoffe werden hierbei bevorzugt diejenigen verwendet, die über einen Linker Y bzw. Y' verfügen.

Als weitere Effektstoffe kommen weiterhin Hilfsmittel für organische Polymere in Betracht. Unter Hilfsmitteln sind beispielsweise Stoffe zu verstehen, die das Beschlagen von Folien oder Formteilen aus Kunststoffen zumindest weitgehend verhindern, sog. Antifogging agents. Außerdem eignen sich als Polymeradditive Antibeschlagsmittel für organische Polymere, aus denen insbesondere Platten oder Folien hergestellt werden. Solche Polymeradditive werden beispielsweise beschrieben von F.Wylin, in Plastics Additives Handbook, 5th Edition, Hanser, ISBN 1-56990-295-X, Seiten 609 - 626. Erfindungsgemäß lassen sich daher modifizierte ZnO-Teilchen, die als weitere Effektstoffe Hilfsmittel enthalten als Anti-Fogging oder Antibeschlagsmittel verwenden.

Als Hilfsmittel werden bevorzugt diejenigen weiteren Effektstoffe verwendet, die über einen Linker Y bzw. Y' verfügen.

Weitere geeignete weitere Effektstoffe sind Gleitmittel wie oxidierte Polyethylenwachse sowie Antistatika für organische Polymere. Beispiele für Antistatika vgl. die obengenannte Literaturstelle F. Wylin, Plastics Additives Handbook, Seiten 627-645.

Weitere geeignete weitere Effektstoffe sind Flammschutzmittel, die beispielsweise in Römpp, 10. Auflage, Seiten 1352 und 1353 sowie in Ullmanns, Encyclopedia of Industrial Chemistry, Vol. 14, 53-71 beschrieben werden. Erfindungsgemäß lassen sich daher modifizierte ZnO-Teilchen, die als weitere Effektstoffe Flammschutzmittel enthalten als Flammschutzmittel für Polymeren verwenden. Als Flammschutzmittel werden bevorzugt diejenigen weiteren Effektstoffe verwendet, die über einen Linker Y bzw. Y' verfügen.

Handelsübliche Stabilisatoren und Hilfsmittel werden beispielsweise unter den Markennamen Tinuvin®, Chimassorb®, und Irganox® von Ciba, Cyasorb® und Cyanox® von Cytec, Lowilite®, Lowinox®, Anox®, Alkanox®, Ultranox® und Weston® von Chemtura und Hostavin® und Hostanox® von Clariant vertrieben. Stabilisatoren und Hilfsmittel werden beispielsweise beschrieben in Plastics Additives Handbook, 5. Auflage, Hanser Verlag, ISBN 1-56990-295-X. Als handelsübliche Stabilisatoren und Hilfsmittel werden bevorzugt diejenigen weiteren Effektstoffe verwendet, die über einen Linker Y bzw. Y' verfügen.

Andere weitere Effektstoffe sind organische Farbstoffe, die Licht im sichtbaren Bereich absorbieren, oder optische Aufheller. Solche Farbstoffe und optische Aufheller werden beispielsweise in der WO 99/40123, Seite 10, Zeile 14 bis Seite 25, Zeile 25 ausführlich beschrieben, auf die hier ausdrücklich Bezug genommen wird. Während organische Farbstoffe ein Absorptionsmaximum im Wellenlängenbereich von 400 bis 850 nm besitzen, haben optische Aufheller ein oder mehrere Absorptionsmaxima im Bereich von 250 bis 400 nm. Optische Aufheller emittieren bekanntlich beim Bestrahlen mit UV-Licht eine Fluoreszenzstrahlung im sichtbaren Bereich. Beispiele für optische Aufheller sind Verbindungen aus den Klassen der Bisstyrylbenzole, Stilbene, Benzoxazole, Cumarine, Pyrene und Naphthaline. Handelsübliche optische Aufheller werden unter den Marken Tinopal®, Uvitex® (beide von Ciba Speciality Chemicals), Ultraphor® (BASF SE) und Blankophor® (Bayer) verkauft. Optische Aufheller werden außerdem in Römpp, 10. Auflage, Band 4, 3028 - 3029 (1998) und in Ullmanns, Encyclopedia of Industrial Chemistry, Vol. 24, 363 - 386 (2003) beschrieben. Erfindungsgemäß lassen sich daher modifizierte ZnO-Teilchen, die als weitere Effektstoffe organische Farbstoffe oder Aufheller enthalten zur Anfärbung oder Aufhellung von Polymeren verwenden. Als organische Farbstoffe oder Aufheller werden bevorzugt diejenigen weiteren Effektstoffe verwendet, die über einen Linker Y bzw. Y' verfügen.

Weitere geeignete weitere Effektstoffe sind IR-Farbstoffe, die beispielsweise von der BASF SE als Lumogen® IR verkauft werden. Lumogen® Farbstoffe umfassen Verbindungen der Klassen der Perylene, Naphthalimide, oder Quaterylene. Erfindungsgemäß lassen sich daher modifizierte ZnO-Teilchen, die als weitere Effektstoffe IR-Farbstoffe enthalten als IR-Absorber für Polymere oder zur unsichtbaren Markierung von Polymeren verwenden. Als IR-Farbstoffe werden bevorzugt diejenigen weiteren Effektstoffe verwendet, die über einen Linker Y bzw. Y' verfügen.

Die erfindungsgemäßen modifizierten ZnO-Teilchen lassen sich selbstverständlich nachträglich mit aus dem Stand der Technik bekannten Verfahren weiter an ihrer Oberfläche modifizieren oder die weiteren Effektstoffe lassen sich chemisch weiter umsetzen.

In einer Ausführungsform des erfindungsgemäßen Verfahrens können (Schritt c.) Mischungen von unterschiedlichen weiteren Effektstoffen eingesetzt werden, wobei die weiteren Effektstoffe unterschiedliche funktionelle Gruppen Z enthalten können. Als weiteren Effektstoffe werden in der Mischung diejenigen verwendet, die über einen Linker Y bzw. Y' verfügen. Die Mischung von unterschiedlichen weiteren Effektstoffen kann entweder vor der Zugabe bereitgestellt werden, oder aber durch die jeweilige Zugabe der weiteren Effektstoffe erzeugt werden. Die Zugabe der weiteren Effektstoffe kann hierbei gleichzeitig oder zeitlich versetzt, überlappend oder nacheinander erfolgen. Bevorzugt lassen sich mit Hilfe des erfindungsgemäßen Verfahrens modifizierte ZnO-Zeilchen, enthaltend weitere Effektstoffe mit verschiedenen Z herstellen, wobei die weiteren Effektstoffe nacheinander (Schritt c.) zugegeben werden. Die mit weiteren Effektstoffen mit verschiedenen Z hergestellten efindungsgemäßen modifizierten ZnO-Teilchen weisen im Allgemeinen kombinierte Eigenschaften, beruhend auf den verschiedenen Z, auf. Beispielsweise lassen sich auf diese Weise modifizierte ZnO-Teilchen herstellen, die verschiedene UV-Absorber enthalten, und damit das gesamte benötigte Absorptionsspektrum abdecken. Weitere Kombinationen funktioneller Gruppen sind beispielsweise Flammschutzmittel mit Farbstoffen oder UV-Absorber mit Flammschutzmitteln. Je nach gewünschtem Anwendungsbereich können weitere Kombinationen ausgewählt werden. Solche Kombinationen zeigen häufig Synergien.

Der Feststoffgehalt der erfindungsgemäß hergestellten Suspensionen enthaltend modifizierte ZnO-Teilchen oder flüssigen Formulierungen wird in erster Näherung durch die erfindungsgemäßen modifizierten ZnO-Teilchen bestimmt und variiert je nach Anwendung in einem weiten Bereich. In der Regel liegt der Feststoffgehalt im Bereich von 1 bis 90 Gel.-% und insbesondere im Bereich von 5 bis 70 Gew.-% bezogen auf das Gesamtgewicht der flüssigen Formulierung oder der erfindungsgemäß hergestellten Suspension.

Die erfindungsgemäßen flüssigen Formulierungen oder die erfindungsgemäß hergestellten Suspensionen können als solche oder nach Aufkonzentration oder Verdünnung direkt eingesetzt werden. Außerdem können die erfindungsgemäßen flüssigen Formulierungen noch übliche Zusatzstoffe (Additive) enthalten, z. B. die Viskosität verändernde Additive (Andicker, Verdicker), Antischaummittel, Bakterizide, Frostschutzmittel und/oder Schutzkolloide. Die Schutzkolloide können sowohl anionischer, nichtionischer, kationischer, als auch zwitterionischer Natur sein.

Daneben können die erfindungsgemäßen flüssigen Formulierungen oder die erfindungsgemäß hergestellten Suspensionen mit konventionellen Bindemitteln, beispielsweise wässrigen Polymerdispersionen, wasserlöslichen Harzen oder mit Wachsen formuliert werden.

Die erfindungsgemäßen modifizierten ZnO-Teilchen sind in den flüssigen Formulierungen enthalten und lassen sich aus diesen flüssigen Formulierungen durch das Entfernen der flüchtigen Bestandteile der flüssigen Phase auch in Pulverform gewinnen. Im Pulver können die erfindungsgemäßen Teilchen entweder vereinzelt, in agglomerierter Form, oder auch teilweise verfilmt vorliegen. Die erfindungsgemäßen Pulver sind dabei beispielsweise durch Verdampfen der flüssigen Phase, Gefriertrocknung oder durch Sprühtrocknung zugänglich.

Häufig sind erfindungsgemäße flüssige Formulierungen durch eine Redispergierung der erfindungsgemäßen Pulver, beispielsweise in unpolarem Lösungsmittel, zugänglich.

Erfindungsgemäße feste Formulierungen enthalten die modifizierten ZnO-Teilchen je nach Anwendung in unterschiedlicher Konzentration. In der Regel liegt der Anteil der modifizierten ZnO-Teilchen im Bereich von 0,1 bis 50 Gew.-% und insbesondere im Bereich von 0,5 bis 20 Gew.-% bezogen auf das Gesamtgewicht der festen Formulierung.

Beispielsweise handelt es sich bei den festen Formulierungen um eine Mischung der erfindungsgemäßen modifizierten ZnO-Teilchen in einem polymeren Trägermaterial, z.B. Polyolefine (z.B. Polyethylen niedriger oder hoher Dichte, Polypropylen), Styrolhomo- oder-copolymere, Polymere chlorierter Alkene (z.B. Polyvinylchlorid), Polyamide, Polyester (z.B. Polyethylen- oder Polybutylenterephthalat), Polycarbonate oder Polyurethane.

Erfindungsgemäße feste Formulierungen sind auch Mischungen aus den modifizierten ZnO-Teilchen mit relativ niedermolekularen Matrizes, z.B. Polyethylenwachsen.

Zur Herstellung der festen Formulierung können die modifizierten ZnO-Teilchen zum Beispiel durch Dispergieren bei höherer Temperatur in die aufgeschmolzene Matrix eingebracht werden, wobei beim Abkühlen die feste Formulierung entsteht.

Die feste Formulierung kann gegebenenfalls noch Hilfsmittel enthalten, die die Verteilung der modifizierten ZnO-Teilchen in der festen Matrix verbessern (Dispergiermittel). Beispielsweise können hierfür Wachse eingesetzt werden.

Die festen Formulierungen können unverdünnt oder nach dem Verdünnen auf die Gebrauchskonzentration verwendet werden.

Feste Formulierungen sind beispielsweise die nach dem Entfernen der flüchtigen Bestandteile der oben beschriebenen flüssigen Formulierungen erhaltenen Formulierungen. Hierbei handelt es sich im Allgemeinen um Mischungen/Dispersionen von modifizierten ZnO-Teilchen mit/in Poly- oder Oligomeren (im Masterbatch, in Wachsen, z.B. Luwax® der Firma BASF SE), die als Pulver oder Wachse vorliegen.

Die erfindungsgemäßen festen oder flüssigen Formulierungen und die daraus durch Abtrennung der flüssigen Phase erhältlichen erfindungsgemäßen Pulver haben den Vorteil, dass sie modifizierten ZnO-Teilchen und die weiteren Effektstoffe über einen langen Zeitraum kontrolliert migrationsstabil enthalten, d.h. die weiteren Effektstoffe sind über einen längeren Zeitraum mit den modifizierten ZnO-Teilchen assoziiert und werden nicht an die Umgebung außerhalb der Formulierungen abgegeben. Die modifizierten ZnO-Teilchen und/oder die weiteren Effektstoffe liegen somit in einer für ihre Anwendung besonders vorteilhaften Form vor. Diese Tatsache trifft insbesondere für solche festen oder flüssigen Formulierungen oder Teilchenpulver zu, die einen UV-Absorber enthalten. Die Migrationsstabilität lässt sich beispielsweise durch Sprühtrocknung der flüssigen Formulierung und anschließender Extraktion des Pulvers, z.B. mit Tetrahydrofuran (THF) messen, indem man den durch Extraktion wiedergewonnenen Anteil der weiteren Effektstoffe bestimmt.

Die erfindungsgemäßen modifizierten ZnO-Teilchen in Form ihrer festen oder flüssigen Formulierungen oder Pulver werden bevorzugt zur Ausrüstung, beispielsweise zur Stabilisierung, insbesondere gegenüber UV-Strahlung, von organischen Polymeren eingesetzt. Die Teilchen lassen sich zu diesem Zweck sowohl als feste oder flüssige Formulierung, als auch als Pulver nach den üblichen Methoden in die organischen Polymere einarbeiten. Zu nennen ist hier beispielsweise die Mischung der Teilchen mit den organischen Polymeren vor oder während eines Extrusionsschrittes.

Nach der Einarbeitung der erfindungsgemäßen modifizierten ZnO-Teilchen in die organischen Polymere liegen die Teilchen in der Polymermatrix vor und die weiteren Effektstoffe sind erfindungsgemäß migrationsstabil in den organischen Polymeren enthalten. Die Migrationsstabilität kann analog zum oben angegebenen Verfahren (Extraktion mit THF) für Teilchenpulver auch auf Polymerpulver, die modifizierte ZnO-Teilchen enthalten, angewendet werden. Weiterhin kann die Migrationsstabilität durch optische Bestimmung getestet werden. Hierfür werden aus den organischen Polymeren, enthaltend die modifizierten ZnO-Teilchen, beispielsweise durch Extrusion Filme hergestellt, die bei erhöhter Temperatur (z.B. 60°C) gelagert werden. Nach einer bestimmten Zeitdauer, beispielsweise ein bis zwei Wochen, kann durch eine optische Prüfung festgestellt werden, ob die Teilchen an die Oberfläche der Filme gewandert sind (Bildung von sichtbaren Ablagerungen).

Weiterhin kann die Migration dadurch geprüft werden, dass eine Kunststofffolie, die die zu untersuchenden modifizierten ZnO-Teilchen enthält (Mutterfolie) in engem Kontakt mit einer oder mehreren Folien aus dem gleichen Material aber ohne modifizierte ZnO-Teilchen bringt (Tochterfolie). Dieser Folienstapel wird bei erhöhter Temperatur gelagert und die Konzentration des zu untersuchenden modifizierten ZnO-Teilchens in den Mutter- bzw. Tochterfolien gemessen.

Unter unbelebten organischen Polymeren sind hierbei beliebige Kunststoffe, bevorzugt thermoplastische Kunststoffe, insbesondere Folien, Fasern oder Formkörper beliebiger Gestalt zu verstehen. Diese werden im Rahmen dieser Anmeldung auch einfach als organische Polymere bezeichnet. Weitere Beispiele für die Ausrüstung oder Stabilisierung von organischen Polymeren mit Polymeradditiven können dem Plastics Additives Handbook, 5. Auflage, Hanser Verlag, ISBN 1-56990-295-X entnommen werden. Die organischen Polymere sind bevorzugt Polyolefine, insbesondere Polyethylen oder Polypropylen, Polyamide, Polyacrylnitrile, Polyacrylate, Polymethacrylate, Polycarbonate, Polystyrole, Copolymere des Styrols oder Methylstyrols mit Dienen und/oder Acrylderivaten, Acrylnitril-Butadien-Styrole (ABS), Polyvinylchloride, Polyvinylacetale, Polyurethane oder Polyester. Organische Polymere können auch Co-Polymere, Mischungen oder Blends der oben genannten Polymere sein. Besonders bevorzugte Polymere sind Polyolefine, insbesondere Polyethylen oder Polypropylen.

Um ein thermoplastisches Polymer gegen UV-Einwirkung zu stabilisieren, kann man beispielsweise so vorgehen, dass man das Polymer zunächst in einem Extruder aufschmilzt, ein erfindungsgemäß hergestelltes Teilchenpulver mit modifizierten ZnO-Teilchen enthaltend UV-Absorber in die Polymerschmelze bei einer Temperatur von beispielsweise 180 bis 200°C einarbeitet und daraus ein Granulat herstellt, aus dem dann nach bekannten Verfahren Folien, Fasern, oder Formteile hergestellt werden, die gegen die Einwirkung von UV-Strahlung stabilisiert sind.

Die Menge an modifizierten ZnO-Teilchen im Polymer, die zur Stabilisierung des Polymers ausreicht, kann je nach modifiziertem ZnO-Teilchen oder Einsatzzweck über einen weiten Bereich variieren. Bevorzugt enthalten die stabilisierten Polymere von 0,1 bis 10 Gew.-% der modifizierten ZnO-Teilchen bezogen auf das Gesamtgewicht der Mischung. Ganz besonders bevorzugt von 0,5 bis 5,0 Gew.-%.

Natürlich können im Rahmen der erfindungsgemäßen Verwendung auch Mischungen verschiedener erfindungsgemäßer modifizierter ZnO-Teilchen eingesetzt werden. Die modifizierten ZnO-Teilchen dieser Mischungen können gleiche oder unterschiedliche Zusammensetzungen und Größenverteilungen aufweisen. Beispielsweise können UV-Absorber enthaltende modifizierte ZnO-Teilchen auch zusammen mit anderen erfindungsgemäßen modifizierten ZnO-Teilchen, die beispielsweise Stabilisatoren für organische Polymere wie Antioxidantien enthalten, zur Stabilisierung von organischen Polymeren und Lackschichten eingesetzt werden.

In einer weiteren erfindungsgemäßen Verwendung lassen sich die erfindungsgemäßen ZnO-Teilchen als Katalysatoren oder als Bestandteil von Katalysatoren, beispielsweise für die Dehydrogenierung oder Dampfreformierung einsetzen (vgl. WO 2001/005499).

In einer weiteren erfindungsgemäßen Verwendung lassen sich die erfindungsgemäßen ZnO-Teilchen für ZnO-basierte halbleitende Schichten in Dünnschichttransistoren (WO2006/138071, WO 2006/138072) einsetzen.

Von technischem Interesse sind weiterhin beispielsweise solche erfindungsgemäßen flüssigen Formulierungen oder die daraus z.B. durch Sprühtrocknung erhaltenen Pulver, die erfindungsgemäße modifizierte ZnO-Teilchen enthalten, die mindestens ein Antioxidans, beispielsweise phenolische Verbindungen, wie etwa Pentaerythrit tetrakis[3-(3',5'-di-tert-butyl-4'-hydroxyphenyl)propionat] (beispielsweise erhältlich als Irganox® 1010 von Ciba SC),enthalten. Des Weiteren sind Teilchenpulver von Interesse, die mindestens ein Antistatikum für organische Polymere oder ein Antibeschlagsmittel für organische Polymere oder ein Farbmittel für organische Polymere enthalten.

Bevorzugt sind erfindungsgemäße feste oder flüssige Formulierungen die UV-Absorber und Stabilisatoren enthalten.

Für die Verwendung zur Ausrüstung, beispielsweise zur Stabilisierung organischer Polymere, können die erfindungsgemäßen modifizierten ZnO-Teilchen auch zusammen mit anderen Additivsystemen verwendet werden, um die Gesamtwirksamkeit zu verbessern. Beispielsweise mit konventionellen Emulsionskonzentraten, Suspensionskonzentraten, Suspoemulsionskonzentraten von Polymeradditiven. Durch das Abmischen der erfindungsgemäßen modifizierten ZnO-Teilchen mit konventionellen Zubereitungen der vorgenannten Polymeradditive erzielt man zum einen eine Verbreiterung des Wirkspektrums, wenn die konventionelle Zubereitung andere Polymeradditive enthält als die erfindungsgemäßen Teilchen. Zum anderen gehen die Vorteile der erfindungsgemäßen modifizierten ZnO-Teilchen durch das Formulieren mit konventionellen Polymeradditivzubereitungen, insbesondere die verbesserte Migrationsstabilität nicht verloren. Folglich kann man die Anwendungseigenschaften einer konventionellen Polymeradditivzubereitung durch Formulierung mit efindungsgemäßen modifizierten ZnO-Teilchen, die vergleichbare Polymeradditive enthalten, verbessern. Insbesondere ist es wegen der verbesserten Migrationsstabilität möglich bei gleichbleibender Wirksamkeit, die Menge an eingesetzten Additiven zu verringern.

In einer bevorzugten Ausführungsform werden die erfindungsgemäßen modifizierten ZnO-Teilchen zusammen mit weiteren Stabilisatoren zur Stabilisierung von Polymeren verwendet. Insbesondere werden hierfür als weitere Stabilisatoren UV-Absorber, Antioxidantien, sterisch gehinderte Aminen, Nickelverbindungen, Metalldesaktivatoren, Phosphite, Phosphonite, Hydroxylamine, Nitrone, Aminoxide, Benzofuranone, Indolinone, Thiosynergisten, Peroxid-zerstörende Verbindungen oder basische Costabilisatoren verwendet.

Die Menge an weiteren Stabilisatoren im Polymer, kann je nach Stabilisator oder Einsatzzweck über einen weiten Bereich variieren. Bevorzugt enthalten die stabilisierten Polymere von 0,01 bis 2 Gew.-% der weiteren Stabilsatoren bezogen auf das Gesamtgewicht der Mischung. Ganz besonders bevorzugt 0,05 bis 1,0 Gew.-%.

Die erfindungsgemäßen flüssigen Formulierungen sind mit einer Reihe von weiteren Vorteilen verbunden. Zum einen handelt es sich um stabile Formulierungen der modifizierten ZnO-Teilchen, beispielsweise von Polymeradditiven. Insbesondere werden die bei anderen Formulierungen sowie bei Mikro- oder Nanodispersionen der Polymeradditive beobachteten Phasentrennprobleme und ein Absetzen des Polymeradditivs nicht beobachtet, auch bei Anwendung drastischer Bedingungen wie sie teilweise bei der Ausrüstung organischer Polymere mit Polymeradditiven auftreten. Die Auswaschung des Polymeradditivs aus dem behandelten organischen Polymer bei Einwirkung von Wasser ist im Vergleich zu anderen Formulierungen deutlich herabgesetzt. Weiterhin werden Wechselwirkungen der Polymeradditive mit anderen Formulierungsbestandteilen oder Co-Polymeradditiven, wie sie bei konventioneller Formulierung häufig auftreten, nicht beobachtet. Zudem wird der Abbau der Polymeradditive durch Substrat- oder Umwelteinflüsse, wie pH-Wert des Milieus oder UV-Strahlung verlangsamt oder gar ganz unterbunden. Eine verringerte Wirksamkeit der Polymeradditive durch die Einbindung in eine Polymermatrix wird überraschenderweise im Allgemeinen nicht beobachtet.

Ein weiterer Gegenstand der Erfindung ist die Verwendung von modifizierten ZnO-Teilchen, enthaltend als weitere Effektstoffe UV-Absorber, die als UV-Absorber eingesetzt werden können in dermatologischen und kosmetischen Anwendungen. Bevorzugt ist die Verwendung in Sonnenschutzmitteln. Kosmetische oder dermatologische Mittel, die UV-absorbierende modifizierte ZnO-Teilchen enthalten, können in Form einer Emulsion, einer Dispersion, einer Suspension, einer wässrigen Tensidzubereitung, einer Milch, einer Lotion, einer Creme, eines Balsams, einer Salbe, eines Gels, eines Granulats, eines Puders, eines Stiftpräparats, eines Schaums, eines Aerosols oder eines Sprays vorliegen. Diese Mittel werden nach dem Fachmann bekannten Verfahren des Standes der Technik durch Mischen der Einzelkomponenten hergestellt. Weiterhin können diese Mittel weitere, von den modifizierten ZnO-Teilchen verschiedene, UV-Lichtschutzfilter, Pigmente, Vitamine, Hautfeuchthaltemittel, Antioxidantien, antimikrobielle Wirkstoffe, deodorierende oder schweisshemmende Stoffe und/oder Hilfs- und Zusatzstoffe enthalten.

Das Herstellungsverfahren der erfindungsgemäßen modifizierten ZnO-Teilchen ermöglicht einen sehr effizienten und kontrollierten Zugang zu den Teilchen. Die erfindungsgemäßen modifizierten ZnO-Teilchen liegen beispielsweise als Bestandteile von flüssigen Formulierungen oder von Pulvern vor und lassen sich leicht in organische Polymere einarbeiten.

Die erfindungsgemäßen modifizierten ZnO-Teilchen eignen sich insbesondere für die Ausrüstung, beispielsweise gegen statische Aufladung oder Beschlagen und/oder Stabilisierung, beispielsweise gegen Oxidation, Einwirkung von UV-Strahlen, Wärme und/oder Licht, von organischen Polymeren.

Die folgenden Beispiele sollen die Erfindung verdeutlichen, ohne sie jedoch einzuschränken.

Beispiele:

Beispiel 1

Fällung von ZnO aus $ZnCl_2$ und NaOH in Isopropanol und anschließende Modifizierung mit Ölsäure in Toluol

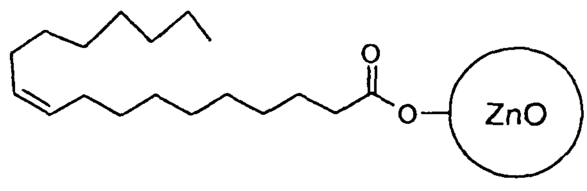

Es wurden zunächst Lösungen 1 und 2 bei 75°C hergestellt. Die Lösung 1 enthielt 13,6 g (0,1 mol) Zinkchlorid

(Fa. Riedel de Haen) in 500 mL Isopropanol. Die Lösung 2 enthielt 8,0 g (0,2 mol) Natriumhydroxid (Fa. Riedel de Haen) in 500 mL Isopropanol. Die Lösung 2 wurde zur Lösung 1 unter Rühren zudosiert. Die entstehende Reaktionsmischung wurde anschließend 60 Minuten bei 75°C nachgerührt. Die erhaltene weiße Suspension wurde auf Raumtemperatur abgekühlt und in einen Rotationsverdampferkolben überführt. Anschließend wurde Isopropanol bei 70°C und einem Druck von ca. 150 mbar abdestilliert. Der Rückstand wurde in 1 L Toluol bei 40°C dispergiert. Es wurden anschließend 7 g (0,025 mol) Ölsäure (Fa. Riedel de Haen) zugegeben. Das entstehende Gemisch wurde auf 70°C erhitzt und 4 Stunden bei dieser Temperatur gehalten. Die ZnO-enthaltende, transparente Suspension wurde von festem NaCl in einem Scheidentrichter abgetrennt und in einem Rotationsverdampfer aufkonzentriert.

Die Na-Analyse der gewonnenen Suspension ergab ein Na-Gehalt von 0,013 g / 100 g und ein Zn-Gehalt von 2,1 g / 100 g. Dies entspricht einem NaCl/ZnO-Verhältnis von ca. 0,013. Mittels DLS-Messungen (Malvem Instruments) wurde eine mittlere Teilchengröße von ca. 12 nm bestimmt (D100 < 30 nm). Die Bestimmung der Teilchengröße mittels TEM erbrachte eine mittlere Teilchengröße von 10 nm. Mittels SAD (Selected Area Diffraction) konnte nachgewiesen werden, dass es sich in der Tat um ZnO-Teilchen handelt.

Beispiel 2

Fällung von ZnO aus $ZnCl_2$ und NaOH in Isopropanol und anschließende Modifizierung mit 4-Amyloxyzimtsäure in Toluol

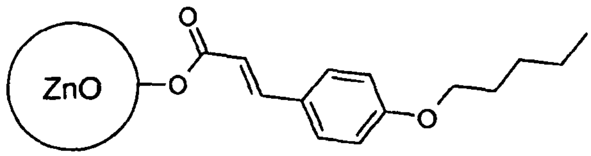

Es wurden zunächst Lösungen 1 und 2 bei 75°C hergestellt. Die Lösung 1 enthielt 13,6 g (0,1 mol) Zinkchlorid (Fa. Riedel de Haen) in 500 mL Isopropanol. Die Lösung 2 enthielt 8,0 g (0,2 mol) Natriumhydroxid (Fa. Riedel de Haen) in 500 mL Isopropanol. Die Lösung 2 wurde zur Lösung 1 unter Rühren zudosiert. Die entstehende Reaktionsmischung wurde anschließend 60 Minuten bei 75°C nachgerührt. Die erhaltene weiße Suspension wurde auf Raumtemperatur abgekühlt und in einen Rotationsverdampferkolben überführt. Anschließend wurde Isopropanol bei 70°C und einem Druck von ca. 150 mbar abdestilliert.

Ein Teil des Rückstandes (29.8g enthaltend 0.025 mol ZnO) wurde in 200 mL Toluol bei 40°C dispergiert. Es wurden anschließend 0.6 g (0.00375 mol) 4-Amyloxyzimtsäure (Fa. Acros) zugegeben. Das entstehende Gemisch wurde auf 70°C erhitzt und 4 Stunden bei dieser Temperatur gehalten. Die ZnO-enthaltende, leicht trübe Suspension wurde von festem NaCl in einem Scheidentrichter abgetrennt.

Die Messung des UV-Spektrums ergab ein $\lambda_{max}$ (Toluol): 294 nm

Beispiel 3

Fällung von ZnO aus $ZnCl_2$ und NaOH in Isopropanol und anschließende Modifizierung mit einer Mischung von Ölsäure und 4-Amyloxyzimtsäure in Toluol

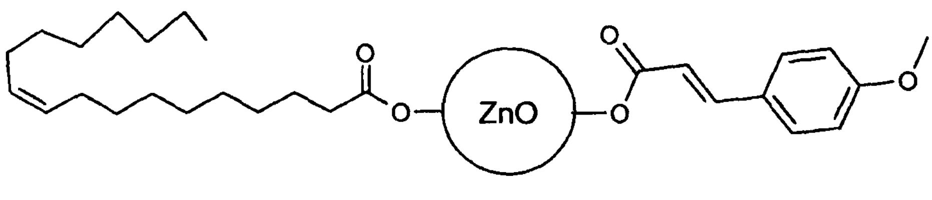

Die ZnO-Herstellung erfolgte analog dem Beispiel 2. Die ZnO-Funktionalisierung erfolgte mit einer Mischung von Ölsäure (0,001875mol) und 4-methoxyzimtsäure (0,00375mol). Es entstand eine homogen leicht trübe ZnO-haltige Lösung.

Die Messung des UV-Spektrums ergab ein $\lambda_{max}$ (Toluol): 294 nm

Beispiel 4

Fällung von ZnO aus $ZnCl_2$ und NaOH in Isopropanol und anschließende Modifizierung mit einer Mischung

von Ölsäure und eines carbonsäurehaltigen Benzotriazols in Toluol

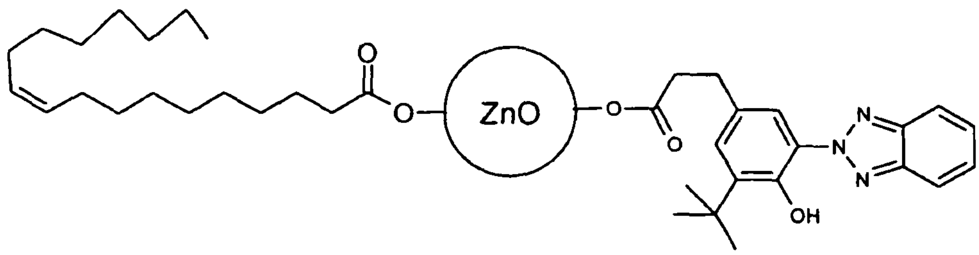

Die ZnO-Herstellung erfolgte analog dem Beispiel 2. Die ZnO-Funktionalisierung erfolgte mit einer Mischung von Ölsäure (0,001875mol) und eines carbonsäurehaltigen Benzotriazols (0,00375mol, hergestellt durch eine Hydrolyse von Tinuvin 384-2 von Fa. Ciba Spezialitätenchemie). Es entstand eine homogen leicht trübe ZnO-haltige Lösung.
Die Messung des UV-Spektrums ergab $\lambda_{max}$ (Toluol): 348, 307 nm.

## Patentansprüche

1. Verfahren zur Herstellung modifizierter ZnO-Teilchen bei dem ein Zink-Salz und eine Base in einem polaren Lösungsmittel vermischt werden und gegebenenfalls nach dem Ausfallen eines Fällungsprodukts das polare Lösungsmittel durch Destillation, Filtration, Zentrifugation oder Abdekantieren entfernt wird und ein Rückstand erhalten wird, der neben dem Zinkoxid gegebenenfalls weitere Nebenprodukte enthält, **dadurch gekennzeichnet, dass** das Verfahren folgende Schritte umfasst,

   a. dieser Rückstand, der neben dem Zinkoxid gegebenenfalls weitere Nebenprodukte enthält, in einem unpolaren Lösungsmittel aufgenommen wird,
   b. oberflächenaktive Substanzen zugegeben werden,
   c. optional weitere Effektstoffe zugegeben werden und anschließend
   d. die modifizierten ZnO-Teilchen von weiteren Nebenprodukten abgetrennt werden.

2. Verfahren nach Anspruch 1, wobei als polare Lösungsmittel Wasser, alkoholische, wässrige Lösungsmittel oder ein Alkohol/Wasser Gemisch eingesetzt werden.

3. Verfahren nach Anspruch 1 oder 2, wobei die Zink-Salze Zinkchlorid, Zinkacetat oder Zink-Acetat-Dihydrat sind.

4. Verfahren nach Anspruch 1 oder 2, wobei die Zink-Salze Salze bestehend aus Zink und gesättigten oder ungesättigten Carbonsäuren mit von 10 bis 30 Kohlenstoffatomen sind.

5. Verfahren nach den Ansprüchen 1 bis 4, wobei als Base Alkali-, Erdalkalihydroxide oder Ammoniumhydroxid eingesetzt werden.

6. Verfahren nach den Ansprüchen 1 bis 5, wobei das unpolare Lösungsmittel ein aromatischer oder aliphatischer Kohlenwasserstoff oder ein Lösungsmittelgemisch enthaltend aromatische und/oder aliphatische Kohlenwasserstoffe ist.

7. Verfahren nach den Ansprüchen 1 bis 6, wobei die oberflächenaktiven Substanzen Carbonsäuren mit von 10 bis 30 Kohlenstoffatomen sind.

8. Verfahren nach den Ansprüchen 1 bis 7, wobei als weitere Effektstoffe UV-Absorber, Stabilisatoren, Flammschutzmittel, Antioxidantien oder Radikalfänger eingesetzt werden.

9. Verfahren nach Anspruch 8, wobei als weitere Effektstoffe UV-Absorber eingesetzt werden.

10. Verfahren nach Anspruch 9, wobei als UV-Absober Verbindungen der allgemeinen Formeln -Y-Z eingesetzt werden, die eine kovalente Wechselwirkung mit den ZnO-Teilchen eingehen, wobei der Linker -Y-

(L1) 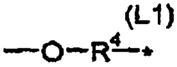 , (L2) 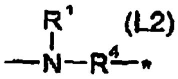 , (L3) 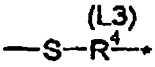 ,

(L4) 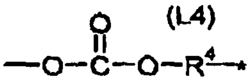 , (L5) 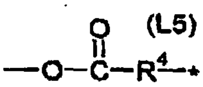 , (L6) 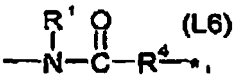 ,

(L7) 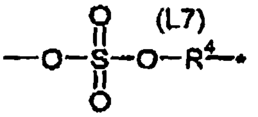 , (L8) 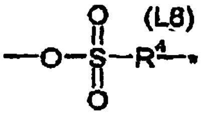 , (L9) 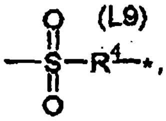 ,

(L10) 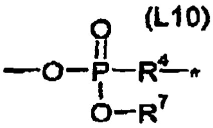 , (L11) 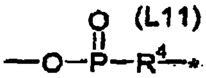 , (L12) 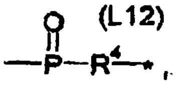 ,

(L13) 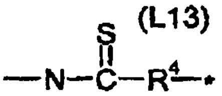 , (L14) 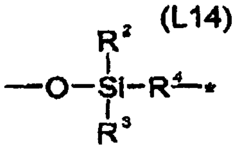 ,

(L19) 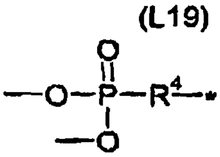 oder (L20) 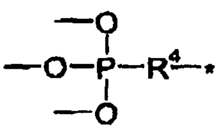 ,

("*" entspricht der Anbindung an die funktionelle Gruppe Z)

ist und weiterhin

$R^1$ H, $C_1$-$C_{20}$-Alkyl, Aryl, Arylalkyl, Heterocyclen, $C_1$-$C_{20}$-Alkylcarbonyl,
$R^2$, $R^3$ unabhängig voneinenander OH, $C_1$-$C_{20}$-Alkoxy, $C_1$-$C_{20}$-Alkyl, Aryl, Arylalkyl, Heterocyclen,
$R^4$ eine chemische Einfachbindung, O, $C_1$-$C_{20}$-Alkylen, $C_1$-$C_{20}$-Alkylen-$R^5$,
$R^5$ O, N, S, $N(R^6)$-C=O, N-$CO_2$, $O_2C$, $CO_2$, $O_2CN$, $OCO_2$,

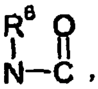 , 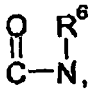 , 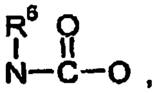 , 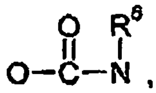 ,

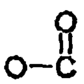 , 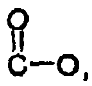 , 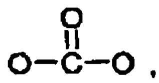 , 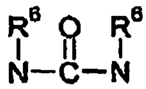

$R^6$ H, $C_1$-$C_{20}$-Alkyl.
$R^7$ H, Metallkation,

wobei die Substituenten $R^1$ bis $R^4$ und/oder $R^6$ jeweils an beliebiger Position durch ein oder mehrere Heteroatome unterbrochen sein können, wobei die Anzahl dieser Heteroatome nicht mehr als 10, bevorzugt nicht mehr als 8, ganz besonders bevorzugt nicht mehr als 5 und insbesondere nicht mehr als 3 beträgt, und/oder jeweils an beliebiger Position, allerdings nicht mehr als fünfmal, bevorzugt nicht mehr als viermal und besonders bevorzugt nicht mehr als dreimal, durch $C_1$-$C_{20}$-Alkyl, $C_1$-$C_{20}$-Alkoxy, Aryl, Aryloxy, Heterocyclen, Heteroatome oder Halogen substituiert sein können, wobei diese ebenfalls maximal zweimal, bevorzugt maximal einmal mit den genannten Gruppen substituiert sein können
die funktionelle Gruppe Z

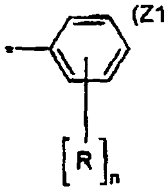 (Z1) ,

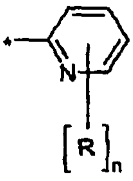 (Z2) ,

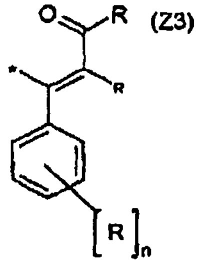 (Z3) ,

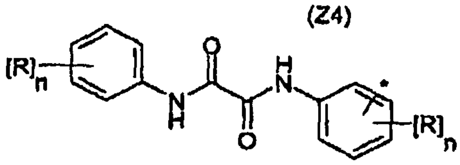 (Z4)

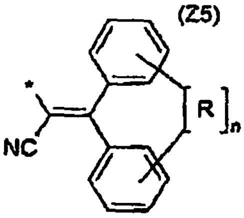 (Z5) ,

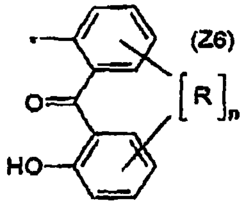 (Z6) ,

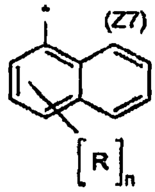 (Z7) ,

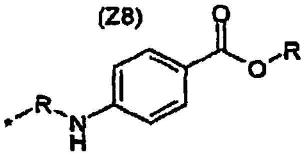 (Z8)

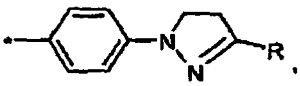 (Z9) ,

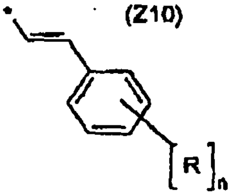 (Z10) ,

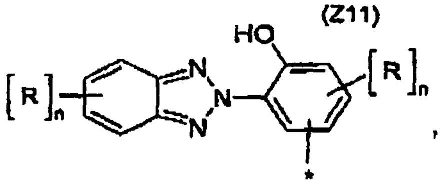 (Z11) ,

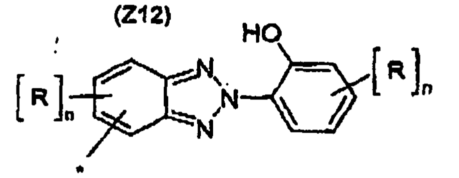 (Z12) ,

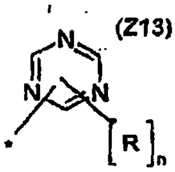 (Z13) ,

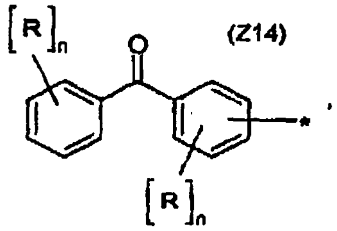 (Z14) ,

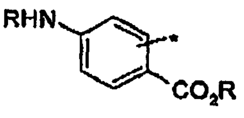 (Z15) ,

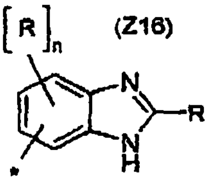 (Z16) ,

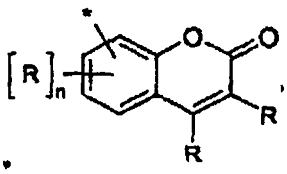 (Z17) ,

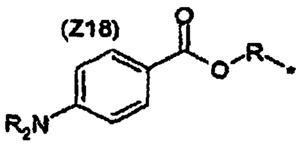 (Z18)

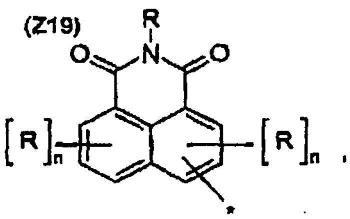 (Z19) ,

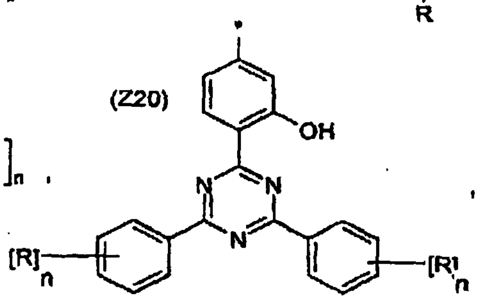 (Z20) ,

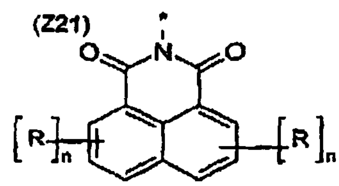 (Z21) ,

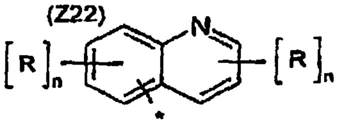 (Z22)

(* symbolisiert die Anbindungsstelle an den Linker Y bzw. Y')

ist, wobei

R Halogen, Hydroxy, Phenyl, $C_1$-$C_{20}$-Alkyl, Hydroxyphenyl, $C_1$-$C_{20}$-Alkoxy, Aryl, Aryloxy, Amino, Mono- oder Di-alkylamino, Nitril, Carboxylat, Ester, Thiol, Sulfoxide, Sulfonsäure, Acyl, Formyl, Carbonyloxyalkyl, Carbonylaminoalkyl,

n eine ganze Zahl aus dem Bereich von 0 bis 4

ist, und die n Substituenten R unabhängig voneinander gleich oder verschieden sein können, und wobei der Substituent R an beliebiger Position durch ein oder mehrere Heteroatome unterbrochen sein kann, wobei die Anzahl dieser Heteroatome nicht mehr als 10, bevorzugt nicht mehr als 8, ganz besonders bevorzugt nicht mehr als 5 und insbesondere nicht mehr als 3 beträgt, und/oder jeweils an beliebiger Position, allerdings nicht mehr als fünfmal, bevorzugt nicht mehr als viermal und besonders bevorzugt nicht mehr als dreimal, durch $C_1$-$C_{20}$-Alkyl, $C_1$-$C_{20}$-Alkoxy, Aryl, Aryloxy, Heterocyclen, Heteroatome oder Halogen substituiert sein kann, wobei diese ebenfalls maximal zweimal, bevorzugt maximal einmal mit den genannten Gruppen substituiert sein können.

**11.** Modifizierte ZnO-Teilchen hergestellt gemäß den Ansprüchen 8 bis 10.

**12.** Materialien enthaltend modifizierte ZnO-Teilchen gemäß Anspruch 11.

**13.** Dispersionen oder Suspensionen enthaltend modifizierte ZnO-Teilchen hergestellt gemäß Anspruch 11.

**14.** Verfahren zur Einarbeitung von modifizierten ZnO-Teilchen hergestellt gemäß Anspruch 11 in Materialien, wobei die modifizierten ZnO-Teilchen in Form von Dispersionen oder Suspensionen gemäß Anspruch 13 in die Materialien eingearbeitet werden.

**15.** Verwendung von gemäß Anspruch 11 hergestellten modifizierten ZnO-Teilchen zum Schutz von Material gegen die Einwirkung von Licht, Hitze, Sauerstoff oder Radikalen.

**16.** Verwendung von gemäß Anspruch 11 hergestellten modifizierten ZnO-Teilchen als Katalysatoren oder als Bestandteil von Katalysatoren.

**17.** Verwendung von gemäß Anspruch 11 hergestellten modifizierten ZnO-Teilchen für ZnO-basierte halbleitende Schichten in Dünnschichttransistoren.

**18.** Verwendung von gemäß Anspruch 11 hergestellten modifizierten ZnO-Teilchen in kosmetischen Anwendungen.

## Claims

**1.** A process for the preparation of modified ZnO particles in which a zinc salt and a base are mixed in a polar solvent and, optionally after the precipitation of a precipitation product, the polar solvent is removed by distillation, filtration, centrifugation or decantation and a residue is obtained which, besides the zinc oxide, optionally comprises further by-products, wherein the process comprises the following steps

a) said residue which, besides the zinc oxide, optionally comprises further by-products is taken up in a nonpolar solvent,
b) surface-active substances are added,
c) optionally further effect substances are added and then
d) the modified ZnO particles are separated off from further by-products.

**2.** The process according to claim 1, where the polar solvents used are water, alcoholic, aqueous solvents or an alcohol/water mixture.

**3.** The process according to claim 1 or 2, where the zinc salts are zinc chloride, zinc acetate or zinc acetate dihydrate.

**4.** The process according to claim 1 or 2, where the zinc salts are salts consisting of zinc and saturated or unsaturated carboxylic acids having from 10 to 30 carbon atoms.

**5.** The process according to claims 1 to 4, where alkali metal hydroxides, alkaline earth metal hydroxides or ammonium hydroxide are used as base.

**6.** The process according to claims 1 to 5, where the nonpolar solvent is an aromatic or aliphatic hydrocarbon or a solvent mixture comprising aromatic and/or aliphatic hydrocarbons.

**7.** The process according to claims 1 to 6, where the surface-active substances are carboxylic acids with from 10 to

30 carbon atoms.

**8.** The process according to claims 1 to 7, where the further effect substances used are UV absorbers, stabilizers, flame retardants, antioxidants or free-radical scavengers.

**9.** The process according to claim 8, where the further effect substances used are UV absorbers.

**10.** The process according to claim 9, where the UV absorbers used are compounds of the general formulae - Y-Z which enter into a covalent interaction with the ZnO particles, where the linker -Y- is

(L1) 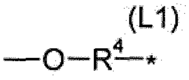 , (L2) 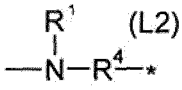 , (L3) 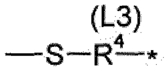 ,

(L4) 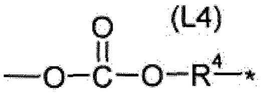 , (L5) 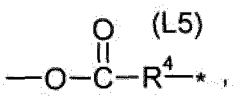 , (L6) 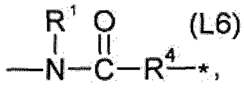 ,

(L7) 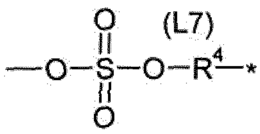 , (L8) 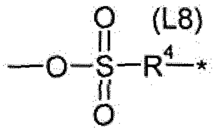 , (L9) 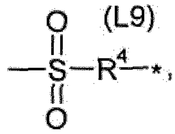 ,

(L10) 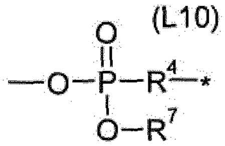 , (L11) 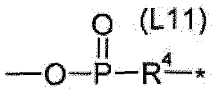 , (L12) 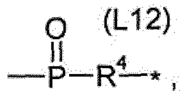 ,

(L13) 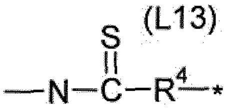 , (L14) 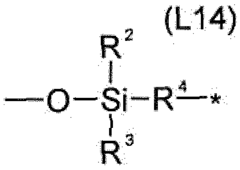 ,

(L19) 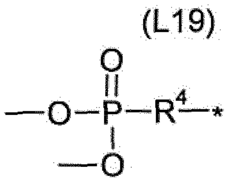 or (L20) 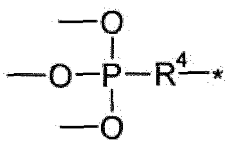 ,

("*" corresponds to the bond to the functional group Z)

and furthermore

$R^1$ is H, $C_1$-$C_{20}$-alkyl, aryl, arylalkyl, heterocycles, $C_1$-$C_{20}$-alkylcarbonyl,
$R^2$, $R^3$ independently of one another are OH, $C_1$-$C_{20}$-alkoxy, $C_1$-$C_{20}$-alkyl, aryl, arylalkyl, heterocycles,
$R^4$ is a chemical single bond, O, $C_1$-$C_{20}$-alkylene, $C_1$-$C_{20}$-alkylene-$R^5$,
$R^5$ is O, N, S, N($R^6$)-C=O, N-$CO_2$, $O_2C$, $CO_2$, $O_2CN$, $OCO_2$,

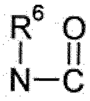 , 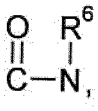 , 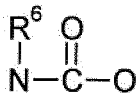 , 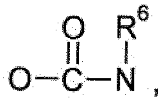 ,

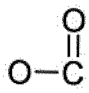, 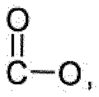, 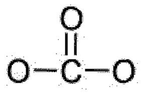, 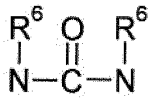

$R^6$ is H, $C_1$-$C_{20}$-alkyl,
$R^7$ is H, metal cation,

where the substituents $R^1$ to $R^4$ and/or $R^6$ May in each case be interrupted at any desired position by one or more heteroatoms, where the number of these heteroatoms is not more than 10, preferably not more than 8, very particularly preferably not more than 5 and especially not more than 3, and/or may in each case be substituted at any desired position, but not more than five times, preferably not more than four times and particularly preferably not more than three times, by $C_1$-$C_{20}$-alkyl, $C_1$-$C_{20}$-alkoxy, aryl, aryloxy, heterocycles, heteroatoms or halogen, where these can likewise be substituted a maximum of twice, preferably a maximum of once, by the specified groups,
the functional group Z is

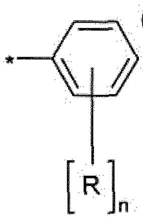 (Z1), 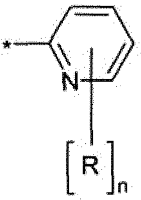 (Z2), 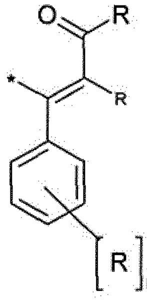 (Z3), 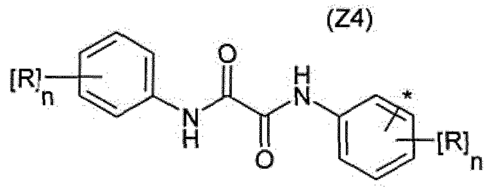 (Z4)

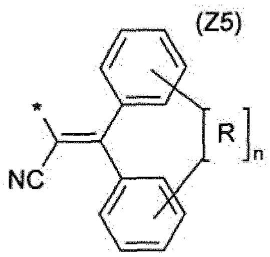 (Z5), 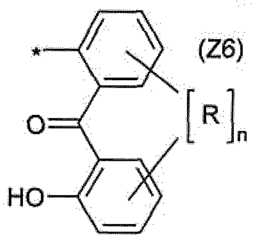 (Z6), 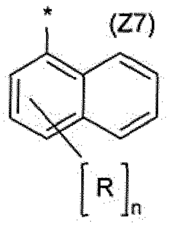 (Z7), 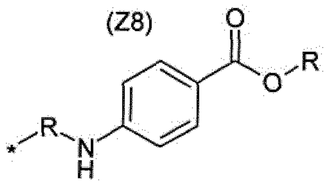 (Z8)

(Z9)

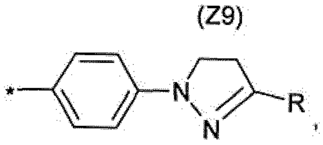,

(Z10)

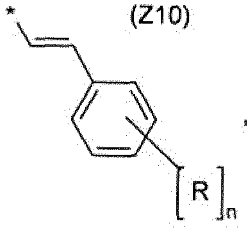,

(Z11)

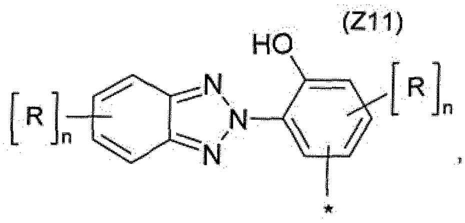,

(Z12)

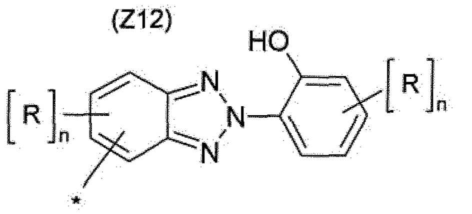,

(Z13)

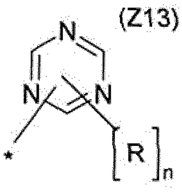,

(Z14)

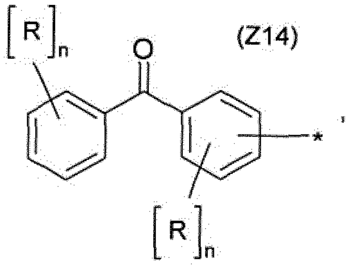,

(Z15)

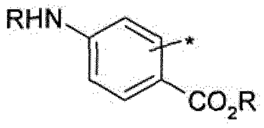,

(Z16)

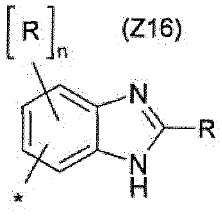,

(Z17)

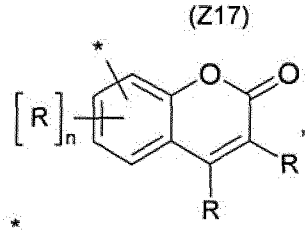,

(Z18)

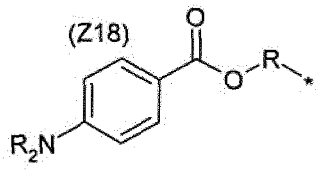

(Z19) (Z20)

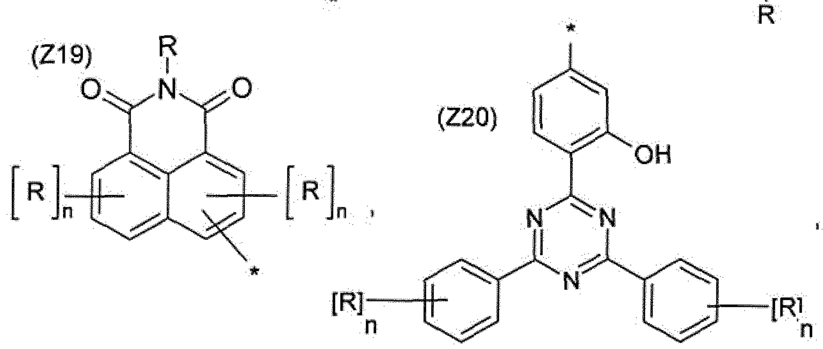,

(Z21)

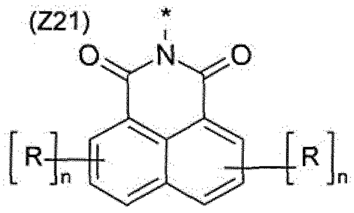,

(Z22)

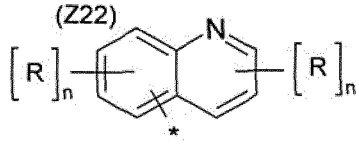

(* symbolizes the bonding site to the linker Y or Y')

where

R is halogen, hydroxy, phenyl, $C_1$-$C_{20}$-alkyl, hydroxyphenyl, $C_1$-$C_{20}$-alkoxy, aryl, aryloxy, amino, mono- or dialkylamino, nitrile, carboxylate, ester, thiol, sulfoxides, sulfonic acid, acyl, formyl, carbonyloxyalkyl, carbonylaminoalkyl,
n is an integer from the range from 0 to 4,

and the n substituents R, independently of one another, may be identical or different, and where the substituent R can be interrupted at any desired position by one or more heteroatoms, where the number of these heteroatoms is not more than 10, preferably not more than 8, very particularly preferably not more than 5 and especially not more than 3, and/or can in each case be substituted at any desired position, but not more than five times, preferably not more than four times and particularly preferably not more than three times, by $C_1$-$C_{20}$-alkyl, $C_1$-$C_{20}$-alkoxy, aryl, aryloxy, heterocycles, heteroatoms or halogen, where these can likewise be substituted a maximum of twice, preferably a maximum of once, by the specified groups.

**11.** A modified ZnO particle prepared according to claims 8 to 10.

**12.** A material comprising modified ZnO particles according to claim 11.

**13.** A dispersion or suspension comprising modified ZnO particles prepared according to claim 11.

**14.** A method for the incorporation of modified ZnO particles prepared according to claim 11 into materials, where the modified ZnO particles are incorporated into the materials in the form of dispersions or suspensions according to claim 13.

**15.** The use of modified ZnO particles prepared according to claim 11 for protecting material against the effect of light, heat, oxygen or free radicals.

**16.** The use of modified ZnO particles prepared according to claim 11 as catalysts or as constituent of catalysts.

**17.** The use of modified ZnO particles prepared according to claim 11 for Zno-based semiconductive films in thin-film transistors.

**18.** The use of modified ZnO particles prepared according to claim 11 in cosmetic applications.

## Revendications

**1.** Procédé pour la préparation de particules modifiées de ZnO, dans lequel un sel de zinc et une base sont mélangés dans un solvant polaire et le solvant polaire est le cas échéant éliminé, après la précipitation d'un précipité, par distillation, filtration, centrifugation ou décantation et un résidu est obtenu, qui contient, outre l'oxyde de zinc, le cas échéant d'autres produits secondaires, **caractérisé en ce que** le procédé comprend les étapes suivantes :

a. ce résidu, qui contient outre l'oxyde de zinc, le cas échéant d'autres produits secondaires, est repris dans un solvant non polaire,
b. des substances tensioactives sont ajoutées,
c. éventuellement d'autres substances conférant un effet sont ajoutées et ensuite
d. les particules modifiées de ZnO sont séparées des autres produits secondaires.

**2.** Procédé selon la revendication 1, de l'eau, des solvants alcooliques, aqueux zou un mélange alcool/eau étant utilisé comme solvants polaires.

**3.** Procédé selon la revendication 1 ou 2, les sels de zinc étant le chlorure de zinc, l'acétate de zinc ou l'acétate de zinc dihydraté.

**4.** Procédé selon la revendication 1 ou 2, les sels de zinc étant des sels constitués par du zinc et des acides carboxyliques saturés ou insaturés comprenant 10 à 30 atomes de carbone.

**5.** Procédé selon les revendications 1 à 4, des hydroxydes de métal alcalin ou alcalino-terreux ou de l'hydroxyde d'ammonium étant utilisé(s) comme base.

**6.** Procédé selon les revendications 1 à 5, le solvant non polaire étant un hydrocarbure aromatique ou aliphatique ou un mélange de solvants contenant des hydrocarbures aromatiques et/ou aliphatiques.

**7.** Procédé selon les revendications 1 à 6, les substances tensioactives étant des acides carboxyliques comprenant 10 à 30 atomes de carbone.

**8.** Procédé selon les revendications 1 à 7, des absorbants des UV, des stabilisateurs, des agents ignifuges, des antioxydants ou des pièges de radicaux étant utilisés comme autres substances conférant un effet.

**9.** Procédé selon la revendication 8, des absorbants des UV étant utilisés comme autres substances conférant un effet.

**10.** Procédé selon la revendication 9, des composés de formule générale -Y-Z, qui entrent en interaction covalente avec les particules de ZnO, étant utilisés comme absorbants des UV, le lieur -Y- représentant

(L1) 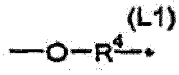 , (L2) 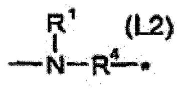 , (L3) 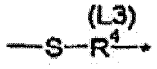 ,

(L4) 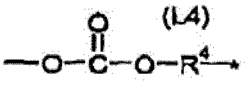 , (L5) 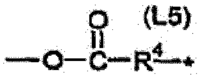 , (L6) 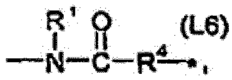 ,

(L7) 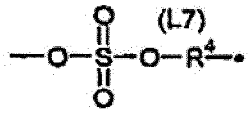 , (L8) 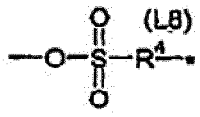 , (L9) 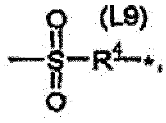 ,

(L10) 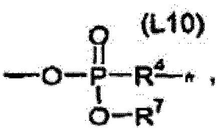 , (L11) 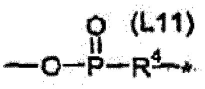 , (L12) 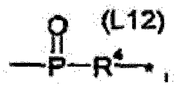 ,

(L13) 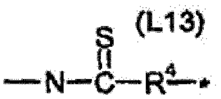 , (L14) 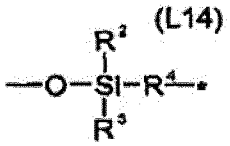 ,

(L19) 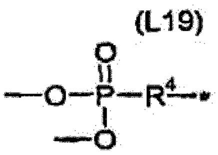 ou (L20) 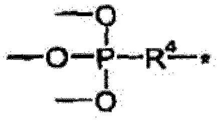 ,

("*" correspond à la liaison au groupe fonctionnel Z) et en outre

$R^1$ représente H, $C_1$-$C_{20}$-alkyle, aryle, arylalkyle, des hétérocycles, $C_1$-$C_{20}$-alkylcarbonyle,
$R^2$, $R^3$ représentent, indépendamment l'un de l'autre, OH, $C_1$-$C_{20}$-alcoxy, $C_1$-$C_{20}$-alkyle, acyle, arylalkyle, des hétérocycles,
$R^4$ représente une simple liaison chimique, O, $C_1$-$C_{20}$-alkylène, $C_1$-$C_{20}$-alkyléne-$R^5$,
$R^5$ représente O, N, S, N($R^6$)-C=O, N-$CO_2$, $O_2C$, $CO_2$, $O_2CN$, $OCO_2$,

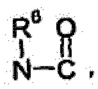 , 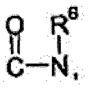 , 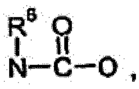 , 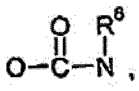 ,

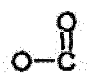 , 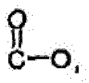 , 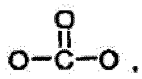 , 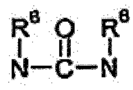

$R^6$ représente H, $C_1$-$C_{20}$-alkyle,

$R^7$ représente H, un cation métallique,

les substituants $R^1$ à $R^4$ et/ou $R^6$ pouvant à chaque fois être interrompus, en n'importe quelle position, par un ou plusieurs hétéroatomes, le nombre de ces hétéroatomes n'étant pas supérieur à 10, de préférence pas supérieur à 8, de manière tout particulièrement préférée pas supérieur à 5 et en particulier pas supérieur à 3, et/ou à chaque fois être substitués, en n'importe quelle position, mais pas plus que pentasubstitués, de préférence pas plus que tétrasubstitués et de manière particulièrement préférée pas plus que trisubstitués, par $C_1$-$C_{20}$-alkyle, $C_1$-$C_{20}$-alcoxy, aryle, aryloxy, des hétérocycles, des hétéroatomes ou des halogènes, ceux-ci pouvant également être au maximum disubstitués, de préférence au maximum monosubstitués par les groupes mentionnés le groupe fonctionnel Z représentant

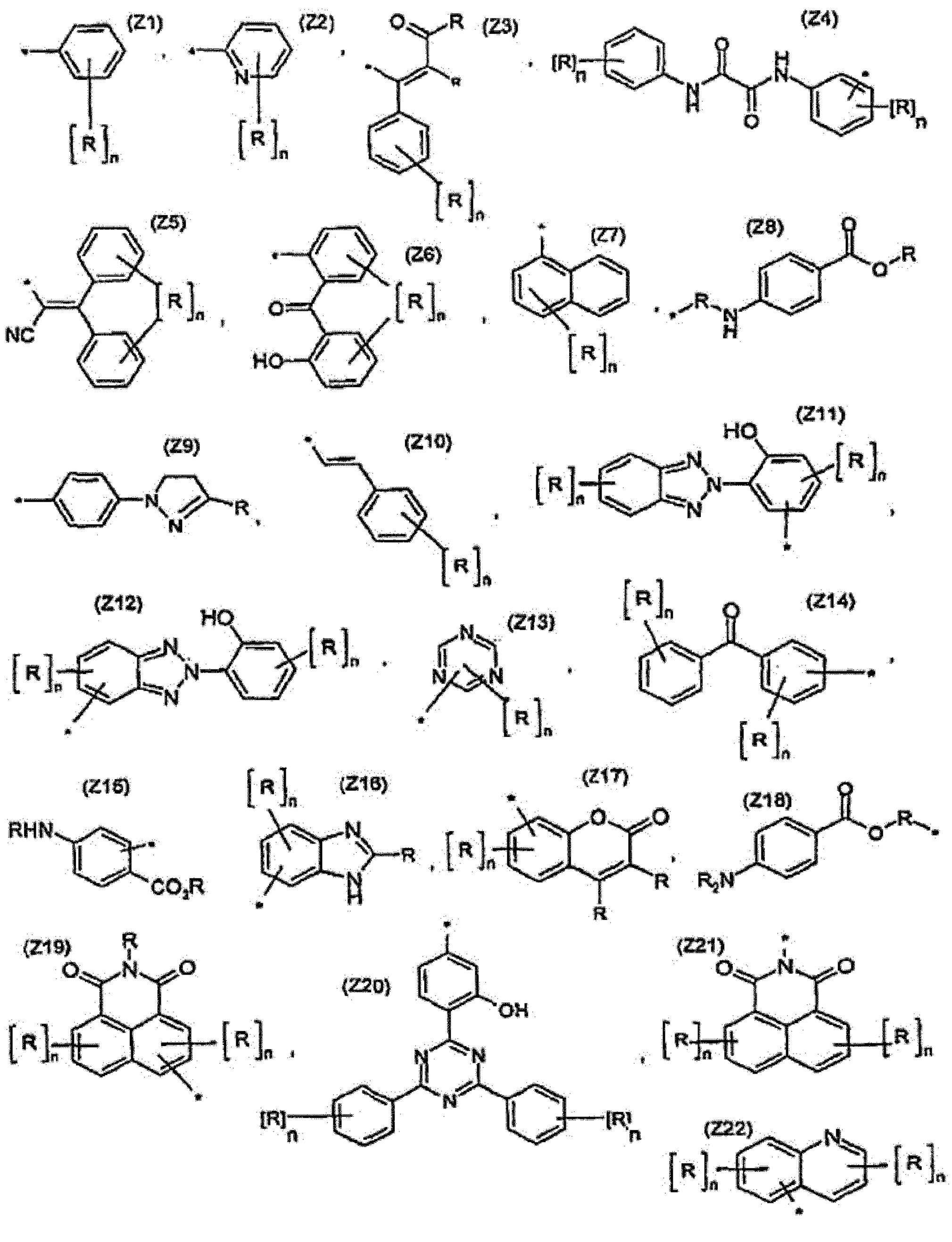
(Z1), (Z2), (Z3), (Z4), (Z5), (Z6), (Z7), (Z8), (Z9), (Z10), (Z11), (Z12), (Z13), (Z14), (Z15), (Z16), (Z17), (Z18), (Z19), (Z20), (Z21), (Z22)

(* symbolise le site de liaison au lieur Y ou, selon le cas, Y')

R représentant halogène, hydroxy, phényle, $C_1$-$C_{20}$-alkyle, hydroxyphényle, $C_1$-$C_{20}$-alcoxy, aryle, aryloxy, ami-

no, monoalkylamino ou dialkylamino, nitrile, carboxylate, ester, thiol, des sulfoxydes, acide sulfonique, acyle, formyle, carbonyloxyalkyle, carbonylaminoalkyle,
n valant un nombre entier de la plage de 0 à 4,

et les n substituants R pouvant être identiques ou différents, indépendamment les uns des autres, et le substituant R pouvant être interrompu, en n'importe quelle position, par un ou plusieurs hétéroatomes, le nombre de ces hétéroatomes n'étant pas supérieur à 10, de préférence pas supérieur à 8, de manière tout particulièrement préférée pas supérieur à 5 et en particulier pas supérieur à 3, et/ou à chaque fois être substitué, en n'importe quelle position, mais pas plus que pentasubstitué, de préférence pas plus que tétrasubstitué et de manière particulièrement préférée pas plus que trisubstitué, par $C_1$-$C_{20}$-alkyle, $C_1$-$C_{20}$-alcoxy, aryle, aryloxy, des hétérocycles, des hétéroatomes ou des halogènes, ceux-ci pouvant également être au maximum disubstitués, de préférence au maximum monosubstitués par les groupes mentionnés.

**11.** Particules modifiées de ZnO, préparées selon les revendications 8 à 10.

**12.** Matériaux contentant les particules modifiées de ZnO selon la revendication 11.

**13.** Dispersions ou suspensions contenant les particules modifiées de ZnO préparées selon la revendication 11.

**14.** Procédé pour l'incorporation de particules modifiées de ZnO préparées selon la revendication 11 dans des matériaux, les particules modifiées de ZnO étant incorporées dans les matériaux sous forme de dispersions ou de suspensions selon la revendication 13.

**15.** Utilisation de particules modifiées de ZnO préparées selon la revendication 11 pour la protection d'un matériau contre l'effet de la lumière, de la chaleur, de l'oxygène ou de radicaux.

**16.** Utilisation de particules modifiées de ZnO préparées selon la revendication 11 comme catalyseurs ou comme constituant de catalyseurs.

**17.** Utilisation de particules modifiées de ZnO préparées selon la revendication 11 pour des couches semi-conductrices à base de ZnO dans des transistors en couche mince.

**18.** Utilisation de particules modifiées de ZnO préparées selon la revendication 11 dans des utilisations cosmétiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19907704 A1
- WO 2004111136 A1
- US 20050260122 A1
- WO 2004052327 A2
- JP 4357114 A
- JP 11279524 A
- WO 0050503 A1
- WO 2006138072 A
- DE 3836630 A
- EP 1191041 A2
- EP 1110999 A
- WO 9940123 A
- WO 2001005499 A
- WO 2006138071 A


### In der Beschreibung aufgeführte Nicht-Patentliteratur


- **B. ROHE.** Charakterisierung und Applikationen von unbeschichteten, silan-beschichteten und UVmodifizierten Nano-Zinkoxiden. *Synthese,* 2005, vol. 90, 49
- **SAKOHARA et al.** *J. Chem. Eng. Jap.,* 2001, vol. 34, 15-21
- **ANDERSON et al.** *J. Phys. Chem. B,* 1998, vol. 102, 10169-10175
- **SUN et al.** *J. Sol-Gel Sci. Technol.,* 2007, vol. 43, 237-243
- Schrift Cosmetic Legislation. *Cosmetic Products, European Commission,* 1999, (1), 64-66
- Ullmanns, Encyclopedia of Industrial Chemistry. vol. 3, 629-650
- Römpp. vol. 5, 4206-4207
- **VON F.WYLIN.** Plastics Additives Handbook. Hanser, 609-626
- **F. WYLIN.** Plastics Additives Handbook. 627-645
- **RÖMPP.** Ullmanns, Encyclopedia of Industrial Chemistry. vol. 14, 53-71
- Plastics Additives Handbook. Hanser Verlag
- Römpp. 1998, vol. 4, 3028-3029
- Ullmanns, Encyclopedia of Industrial Chemistry. 2003, vol. 24, 363-386